# EUROPEAN PATENT APPLICATION

(11) **EP 4 521 234 A1**
(43) Date of publication of application: **12.03.2025**
(21) Application number: 22942168.0
(22) Date of filing: 20.05.2022
(51) Int. Cl.: G06F 8/65

(54) **VEHICLE CONTROL METHOD AND DEVICE, AND VEHICLE**

(71) Applicant: Shenzhen Yinwang Intelligent Technologies Co., Ltd., Shenzhen, Guangdong 518129 (CN)
(72) Inventor: LIU, Qiong, Shenzhen, Guangdong 518129 (CN); WANG, Puhao, Shenzhen, Guangdong 518129 (CN); YAN, Haidong, Shenzhen, Guangdong 518129 (CN); LI, Zhen, Shenzhen, Guangdong 518129 (CN)
(74) Representative: Gill Jennings & Every LLP
(86) International application number: PCT/CN2022/094260
(87) International publication number: WO 2023/221131

(57) **Abstract**

This application discloses a vehicle control method and apparatus, and a vehicle. The method includes: In a software upgrade process of a vehicle, a control unit of the vehicle receives a signal from a target unit, where the target unit is configured to sense whether there is a person in the vehicle; and when determining, based on the signal, that there is a person in the vehicle, the control unit controls a basic service unit in the vehicle to provide a basic service. A basic service can be normally provided in the software upgrade process of the vehicle, thereby improving user experience. The method provided in embodiments of this application may be applied to an intelligent vehicle.

## Description

### TECHNICAL FIELD

This application relates to the field of vehicle technologies, and in particular, to a vehicle control method and apparatus, and a vehicle.

### BACKGROUND

With promotion of "Connected, Autonomous, Shared, Electric" of vehicles, there are more and more electronic programs. Vehicle electronic costs account for a gradual increase in vehicle costs, and are significantly increased for new energy vehicles in contrast to conventional vehicles. "Software-defined vehicles" have become a development trend of vehicles, and complexity of vehicle software accordingly increases greatly. To perform software fault recovery in time and implement functions such as update of customized requirements, vehicle software upgrade is increasingly frequent. The vehicle software upgrade includes wired software upgrade, an over-the-air technology (over-the-air technology, OTA), and the like. However, in a software upgrade process of a vehicle, the vehicle cannot be normally used, and consequently user experience is poor.

### SUMMARY

Embodiments of this application disclose a vehicle control method and apparatus, and a vehicle, to normally provide a basic service in a software upgrade process of the vehicle.

According to a first aspect, this application provides a vehicle control method. The method includes:

In a software upgrade process of a vehicle, a control unit of the vehicle receives a signal from a target unit, where the target unit is configured to sense whether there is a person in the vehicle; and
when determining, based on the signal, that there is a person in the vehicle, the control unit controls a basic service unit in the vehicle to provide a basic service.

Optionally, the control unit includes one or more of a vehicle domain controller VDC, a cockpit domain controller CDC, a vehicle integration unit VIU, or a gateway.

Optionally, the target unit is one or more of a vehicle lock controller, a vehicle key controller, a seat controller, a camera, or a vehicle-mounted T-box of the vehicle.

Optionally, the basic service unit includes one or more of an air conditioner, a speaker, an in-vehicle infotainment screen, a horn, a wiper, a vehicle light, or a dashboard in the vehicle.

In this solution, the signal from the target unit can still be received in the software upgrade process of the vehicle, so that when the received signal indicates that there is a person in the vehicle, the basic service unit in the vehicle can be controlled to provide a basic service for a user. Compared with an existing solution in which a service of a vehicle cannot be used in an upgrade process of the vehicle, this solution can meet a basic service requirement of the user in the software upgrade process of the vehicle, thereby improving user experience.

In a possible implementation, the control unit is connected to the target unit through a signal line, and the signal line is configured to transmit the signal from the target unit to the control unit in the software upgrade process of the vehicle.

In this solution, a directly connected signal line may be disposed between the control unit and the target unit, and is specially configured to transmit the signal from the target unit to the control unit in the software upgrade process of the vehicle, so that the control unit can sense whether there is a person in the vehicle, and control the basic service unit in the vehicle to provide a basic service for the user when there is a person in the vehicle. In this solution, when another communication channel is disabled in the software upgrade process of the vehicle, the signal from the target unit can still be transmitted to the control unit. This reduces dependency on controller area network communication, and provides a basis for meeting a basic service requirement of the user in the software upgrade process of the vehicle.

In a possible implementation, the method further includes:

The control unit receives a communication control packet, where the communication control packet indicates the control unit to disable a controller area network CAN communication function; and
after receiving the communication control packet, the control unit reserves a CAN communication function between the control unit and the target unit based on a first preset configuration.

That a control unit of the vehicle receives a signal from a target unit includes:
The control unit receives the signal from the target unit through a controller area network, where the signal is a CAN signal.

Optionally, the first preset configuration indicates that the control unit is allowed to receive only a target signal from the target unit through the controller area network, and the target signal is used to determine whether there is a person in the vehicle.

In a possible implementation, the method further includes:
after receiving the communication control packet, the control unit reserves a CAN communication function with the basic service unit based on a second preset configuration.

That the control unit controls a basic service unit in the vehicle to provide a basic service includes:
The control unit sends a packet to the basic service unit through the controller area network, where the packet indicates the basic service unit to provide a basic service, and the packet is a CAN packet.

In the foregoing solution in which the CAN communication function is reserved based on the preset configuration, in the software upgrade process of the vehicle, a specified CAN communication function is reserved through pre-configuration, so that the signal from the target unit can be transmitted to a control system. In this case, a basic service can be provided in the software upgrade process of the vehicle. In addition, in the software upgrade process of the vehicle, only a CAN communication function necessary for providing a basic service may be reserved, and a CAN communication function of another signal or a vehicle component is still disabled. Therefore, impact on data flushing in the software upgrade process of the vehicle can be reduced as much as possible. In other words, in this application, when impact on a vehicle software upgrade service is reduced as much as possible, a basic service may be provided in the software upgrade process of the vehicle to improve user experience.

In a possible implementation, that the control unit controls a basic service unit in the vehicle to provide a basic service includes: The control unit sends a packet to the basic service unit by using a unified diagnostic services UDS protocol, where the packet indicates the basic service unit to provide a basic service.

In the software upgrade process of the vehicle, the UDS protocol is used to transmit data for data flushing. In this solution, the UDS protocol is used to transmit a packet from the control unit to the basic service unit, so that upgrade data and the packet can be synchronously transmitted. In other words, the basic service unit can be controlled to provide a basic service without affecting flushing of the upgrade data, so that user experience is improved.

In a possible implementation, the target unit includes the vehicle key controller. The signal from the target unit includes a signal that is from the vehicle key controller and that indicates whether a key of the vehicle is placed in the vehicle, where a signal indicating that the key of the vehicle is placed in the vehicle indicates that there is a person in the vehicle, and a signal indicating that the key of the vehicle is not placed in the vehicle indicates that there is no person in the vehicle.

In a possible implementation, the target unit includes the seat controller. The signal from the target unit includes a signal that is from the seat controller and that indicates whether there is a person in a seat of the vehicle, where a signal indicating that there is a person in the seat of the vehicle indicates that there is a person in the vehicle, and a signal indicating that there is no person in the seat of the vehicle indicates that there is no person in the vehicle.

In a possible implementation, the target unit includes the vehicle-mounted T-box, and the signal from the target unit includes a signal that is from the vehicle-mounted T-box and that indicates whether there is a person in the vehicle.

In a possible implementation, the target unit further includes the vehicle lock controller. The signal from the target unit further includes a signal that is from the vehicle lock controller and that indicates that a vehicle lock of the vehicle is in an unlocked or locked state, where a signal indicating that the vehicle lock of the vehicle is in the unlocked state indicates that there is a person in the vehicle, and a signal indicating that the vehicle lock of the vehicle is in the locked state indicates that there is no person in the vehicle.

In a possible implementation, a signal from the vehicle key controller, the seat controller, the camera, or the vehicle-mounted T-box has a higher priority than that from the vehicle lock controller.

The determining, based on the signal, that there is a person in the vehicle includes:
When determining, based on the signal from the vehicle lock controller, that there is no person in the vehicle, and determining, based on the signal from the vehicle key controller, the seat controller, the camera, or the vehicle-mounted T-box, that there is a person in the vehicle, the control unit determines that there is a person in the vehicle.

Whether there is a person in the vehicle is determined based on signals from one or more target units, so that it can be sensed in time that there is a person in the vehicle, and a corresponding basic service unit can be quickly and correspondingly controlled to provide a basic service, to improve user experience. In addition, the foregoing comprehensively determining, based on signals from a plurality of target units, whether there is a person in the vehicle can improve determining accuracy, avoid a resource waste caused by controlling the basic service unit to provide a basic service as it is mistakenly determined that there is a person in the vehicle, and avoid poor user experience caused by failure to provide a basic service as it is mistakenly determined that there is no person in the vehicle.

According to a second aspect, this application provides a vehicle control method. The method includes:
In a software upgrade process of a vehicle, a target unit sends a signal to a control unit of the vehicle when sensing that there is a person in the vehicle, where the signal indicates the control unit to control a basic service unit in the vehicle to provide a basic service.

Optionally, the control unit includes one or more of a vehicle domain controller VDC, a cockpit domain controller CDC, a vehicle integration unit VIU, or a gateway.

Optionally, the target unit is one or more of a vehicle lock controller, a vehicle key controller, a seat controller, a camera, or a vehicle-mounted T-box of the vehicle.

In this solution, in the software upgrade process of the vehicle, the target unit can still send a signal to the control unit, so that when the signal received by the control unit indicates that there is a person in the vehicle, the basic service unit in the vehicle can be controlled to provide a basic service for a user. Compared with an existing solution in which a service of a vehicle cannot be used in an upgrade process of the vehicle, this solution can meet a basic service requirement of the user in the software upgrade process of the vehicle, thereby improving user experience.

In a possible implementation, the target unit is connected to the control unit through a signal line; and the signal line is configured to transmit the signal from the target unit to the control unit in the software upgrade process of the vehicle.

In this solution, a directly connected signal line may be disposed between the target unit and the control unit, and is specially configured to transmit the signal from the target unit to the control unit in the software upgrade process of the vehicle, so that the control unit can sense whether there is a person in the vehicle, and control the basic service unit in the vehicle to provide a basic service for the user when there is a person in the vehicle. In this solution, when another communication channel is disabled in the software upgrade process of the vehicle, the signal from the target unit can still be transmitted to the control unit. This provides a basis for meeting a basic service requirement of the user in the software upgrade process of the vehicle.

In a possible implementation, the method further includes:
The target unit receives a communication control packet, where the communication control packet indicates the target unit to disable a controller area network CAN communication function; and
after receiving the communication control packet, the target unit reserves a CAN communication function with the control unit based on a preset configuration.

That a target unit sends a signal to a control unit of the vehicle includes:
The target unit sends the signal to the control unit through a controller area network, where the signal is a CAN signal.

Optionally, the preset configuration indicates that the target unit is allowed to send only a target signal to the control unit through the controller area network, and the target signal is used to determine whether there is a person in the vehicle.

In the foregoing solution in which the CAN communication function is reserved based on the preset configuration, in the software upgrade process of the vehicle, a specified CAN communication function is reserved through pre-configuration, so that the signal from the target unit can be transmitted to a control system. In this case, a basic service can be provided in the software upgrade process of the vehicle. In addition, in the software upgrade process of the vehicle, only a CAN communication function necessary for providing a basic service may be reserved, and a CAN communication function of another signal or a vehicle component is still disabled. Therefore, impact on data flushing in the software upgrade process of the vehicle can be reduced as much as possible. In other words, in this application, when impact on a vehicle software upgrade service is reduced as much as possible, a basic service may be provided in the software upgrade process of the vehicle to improve user experience.

According to a third aspect, this application provides a vehicle control method. The method includes:
An OTA controller of a vehicle broadcasts a communication control packet to the vehicle based on a preset configuration, where the communication control packet indicates to disable all CAN communication functions except a target CAN communication function in the vehicle, the target CAN communication function includes a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle, where
the first CAN communication function is used to send the target signal to the control unit in a software upgrade process of the vehicle.

Generally, to reduce impact of another data transmission on upgrade data transmission in a vehicle upgrade process, the OTA controller may broadcast the communication control packet to the vehicle to disable a CAN communication function of the entire vehicle. In this case, a basic service of the entire vehicle cannot be used. However, in this solution, when broadcasting the communication control packet, the OTA controller may indicate not to disable the target CAN communication function, and to disable all CAN communication functions except the target CAN communication function. In this way, signal communication between the target unit and the basic control unit can still be maintained while impact on upgrade data transmission is reduced as much as possible, that is, the signal from the target unit can be transmitted to the control unit, so that in the vehicle upgrade process, the control unit can control the basic service unit to provide a basic service based on the signal, to improve user experience.

In a possible implementation, the target CAN communication function further includes a second CAN communication function for transmitting a target packet between the control unit and a basic service unit, and the target packet indicates the basic service unit to provide a basic service.

The second CAN communication function is used to send the target packet to the basic service unit in the software upgrade process of the vehicle.

In this solution, the target CAN communication function further includes the CAN communication function for transmitting the target packet between the control unit and the basic service unit, so that during software upgrade of the vehicle, the control system may send a packet to the basic service unit through the CAN communication function, to indicate the basic service unit to provide a basic service, to improve user experience.

According to a fourth aspect, this application provides a vehicle control apparatus, where the control apparatus is located in a vehicle, and the control apparatus includes:
a receiving module, configured to: in a software upgrade process of the vehicle, receive a signal from a target unit, where the target unit is configured to sense whether there is a person in the vehicle; and
a control module, configured to: when it is determined, based on the signal, that there is a person in the vehicle, control a basic service unit in the vehicle to provide a basic service.

In a possible implementation, the control apparatus is connected to the target unit through a signal line.

The signal line is configured to transmit the signal from the target unit to the control apparatus in the software upgrade process of the vehicle.

In a possible implementation, the receiving module is further configured to receive a communication control packet, where the communication control packet indicates the control apparatus to disable a controller area network CAN communication function.

The control apparatus further includes a reservation module, configured to: after the communication control packet is received, reserve a CAN communication function between the control apparatus and the target unit based on a first preset configuration.

The receiving module is specifically configured to:
receive the signal from the target unit through a controller area network, where the signal is a CAN signal.

In a possible implementation, the first preset configuration indicates that the control apparatus is allowed to receive only a target signal from the target unit through the controller area network, and the target signal is used to determine whether there is a person in the vehicle.

In a possible implementation, the reservation module is further configured to: after the communication control packet is received, reserve a CAN communication function with the basic service unit based on a second preset configuration.

The control apparatus further includes a sending module, and the control module is specifically configured to:
control the sending module to send a packet to the basic service unit through the controller area network, where the packet indicates the basic service unit to provide a basic service, and the packet is a CAN packet.

In a possible implementation, the control apparatus further includes a sending module, and the control module is specifically configured to:
control the sending module to send a packet to the basic service unit by using a unified diagnostic services UDS protocol, where the packet indicates the basic service unit to provide a basic service.

In a possible implementation, the control apparatus includes one or more of a vehicle domain controller VDC, a cockpit domain controller CDC, a vehicle integration unit VIU, or a gateway.

In a possible implementation, the target unit is one or more of a vehicle lock controller, a vehicle key controller, a seat controller, a camera, or a vehicle-mounted T-box of the vehicle.

In a possible implementation, the target unit includes the vehicle key controller. The signal from the target unit includes a signal that is from the vehicle key controller and that indicates whether a key of the vehicle is placed in the vehicle, where a signal indicating that the key of the vehicle is placed in the vehicle indicates that there is a person in the vehicle, and a signal indicating that the key of the vehicle is not placed in the vehicle indicates that there is no person in the vehicle.

In a possible implementation, the target unit includes the seat controller. The signal from the target unit includes a signal that is from the seat controller and that indicates whether there is a person in a seat of the vehicle, where a signal indicating that there is a person in the seat of the vehicle indicates that there is a person in the vehicle, and a signal indicating that there is no person in the seat of the vehicle indicates that there is no person in the vehicle.

In a possible implementation, the target unit includes the vehicle-mounted T-box. The signal from the target unit includes a signal that is from the vehicle-mounted T-box and that indicates whether there is a person in the vehicle.

In a possible implementation, the target unit further includes the vehicle lock controller. The signal from the target unit further includes a signal that is from the vehicle lock controller and that indicates that a vehicle lock of the vehicle is in an unlocked or locked state, where a signal indicating that the vehicle lock of the vehicle is in the unlocked state indicates that there is a person in the vehicle, and a signal indicating that the vehicle lock of the vehicle is in the locked state indicates that there is no person in the vehicle.

In a possible implementation, a signal from the vehicle key controller, the seat controller, the camera, or the vehicle-mounted T-box has a higher priority than that from the vehicle lock controller.

The control apparatus further includes a determining unit, and that the determining unit is configured to determine, based on the signal, that there is a person in the vehicle is specifically:
when determining, based on the signal from the vehicle lock controller, that there is no person in the vehicle, and determining, based on the signal from the vehicle key controller, the seat controller, the camera, or the vehicle-mounted T-box, that there is a person in the vehicle, determining that there is a person in the vehicle.

According to a fifth aspect, this application provides a vehicle apparatus, where the vehicle apparatus includes:
a sending module, configured to: in a software upgrade process of a vehicle, send a signal to a control unit of the vehicle when sensing that there is a person in the vehicle, where the signal indicates the control unit to control a basic service unit in the vehicle to provide a basic service.

In a possible implementation, the vehicle apparatus is connected to the control unit through a signal line.

The signal line is configured to transmit the signal from the vehicle apparatus to the control unit in the software upgrade process of the vehicle.

In a possible implementation, the vehicle apparatus further includes:
a receiving module, configured to receive a communication control packet, where the communication control packet indicates the vehicle apparatus to disable a controller area network CAN communication function; and
a reservation module, configured to: after the communication control packet is received, reserve a CAN communication function with the control unit based on a preset configuration.

The sending module is specifically configured to:
send the signal to the control unit through a controller area network, where the signal is a CAN signal.

In a possible implementation, the preset configuration indicates that the vehicle apparatus is allowed to send only a target signal to the control unit through the controller area network, and the target signal is used to determine whether there is a person in the vehicle.

In a possible implementation, the control unit includes one or more of a vehicle domain controller VDC, a cockpit domain controller CDC, a vehicle integration unit VIU, or a gateway.

In a possible implementation, the vehicle apparatus is one or more of a vehicle lock controller, a vehicle key controller, a seat controller, a camera, or a vehicle-mounted T-box of the vehicle.

According to a sixth aspect, this application provides a vehicle control apparatus, where the control apparatus includes:
a broadcasting module, configured to broadcast a communication control packet to a vehicle based on a preset configuration, where the communication control packet indicates to disable all CAN communication functions except a target CAN communication function, the target CAN communication function includes a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle.

The first CAN communication function is used to send the target signal to the control unit in a software upgrade process of the vehicle.

In a possible implementation, the target CAN communication function further includes a second CAN communication function for transmitting a target packet between the control unit and a basic service unit, and the target packet indicates the basic service unit to provide a basic service.

The second CAN communication function is used to send the target packet to the basic service unit in the software upgrade process of the vehicle.

According to a seventh aspect, this application provides a vehicle control apparatus, where the apparatus is included in a vehicle, and the apparatus includes a processor and a memory. The memory is coupled to the processor, and when executing a computer program stored in the memory, the processor may implement the vehicle control method described in any implementation of the first aspect. The apparatus may further include a communication interface. The communication interface is used by the apparatus to communicate with another apparatus. For example, the communication interface may be a transceiver, a circuit, a bus, a module, or another type of communication interface.

In a possible implementation, the apparatus may include:
the memory, configured to store the computer program; and
the processor, configured to:
   receive a signal from a target unit in a software upgrade process of the vehicle through a communication interface, where the target unit is configured to sense whether there is a person in the vehicle; and
   when determining, based on the signal, that there is a person in the vehicle, control a basic service unit in the vehicle to provide a basic service.

It should be noted that, in this application, the computer program in the memory may be pre-stored, or may be downloaded from the internet and stored when the apparatus is used. A source of the computer program in the memory is not specifically limited in this application. Coupling in embodiments of this application may be indirect coupling or a connection between apparatuses, units, or modules in an electrical form, a mechanical form, or another form, and is used for information exchange between the apparatuses, the units, or the modules.

According to an eighth aspect, this application provides an apparatus of a vehicle, where the apparatus is included in the vehicle, and the apparatus includes a processor and a memory. The memory is coupled to the processor, and when executing a computer program stored in the memory, the processor may implement the vehicle control method described in any implementation of the second aspect. The apparatus may further include a communication interface. The communication interface is used by the apparatus to communicate with another apparatus. For example, the communication interface may be a transceiver, a circuit, a bus, a module, or another type of communication interface.

In a possible implementation, the apparatus may include:
the memory, configured to store the computer program; and
the processor, configured to:
   in a software upgrade process of a vehicle, send a signal to a control unit of the vehicle through a communication interface when sensing that there is a person in the vehicle, where the signal indicates the control unit to control a basic service unit in the vehicle to provide a basic service.

It should be noted that, in this application, the computer program in the memory may be pre-stored, or may be downloaded from the internet and stored when the apparatus is used. A source of the computer program in the memory is not specifically limited in this application. Coupling in embodiments of this application may be indirect coupling or a connection between apparatuses, units, or modules in an electrical form, a mechanical form, or another form, and is used for information exchange between the apparatuses, the units, or the modules.

According to a ninth aspect, this application provides a vehicle control apparatus, where the apparatus is included in a vehicle, and the apparatus includes a processor and a memory. The memory is coupled to the processor, and when executing a computer program stored in the memory, the processor may implement the vehicle control method described in any implementation of the third aspect. The apparatus may further include a communication interface. The communication interface is used by the apparatus to communicate with another apparatus. For example, the communication interface may be a transceiver, a circuit, a bus, a module, or another type of communication interface.

In a possible implementation, the apparatus may include:
the memory, configured to store the computer program; and
the processor, configured to:
   broadcast a communication control packet to the vehicle based on a preset configuration, where the communication control packet indicates to disable all CAN communication functions except a target CAN communication function in the vehicle, the target CAN communication function includes a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle, where the first CAN communication function is used to send the target signal to the control unit in a software upgrade process of the vehicle.

It should be noted that, in this application, the computer program in the memory may be pre-stored, or may be downloaded from the internet and stored when the apparatus is used. A source of the computer program in the memory is not specifically limited in this application. Coupling in embodiments of this application may be indirect coupling or a connection between apparatuses, units, or modules in an electrical form, a mechanical form, or another form, and is used for information exchange between the apparatuses, the units, or the modules.

According to a tenth aspect, this application provides a vehicle, where the vehicle includes a control apparatus and a vehicle apparatus, the control apparatus is the control apparatus according to any implementation of the fourth aspect, and the vehicle apparatus is the vehicle apparatus according to any implementation of the fifth aspect.

According to an eleventh aspect, this application provides a computer-readable storage medium, where the computer-readable storage medium stores a computer program, and the computer program is executed by a processor to implement the method according to the first aspect or any possible implementation of the first aspect.

According to a twelfth aspect, this application provides a computer-readable storage medium, where the computer-readable storage medium stores a computer program, and the computer program is executed by a processor to implement the method according to the second aspect or any possible implementation of the second aspect.

According to a thirteenth aspect, this application provides a computer-readable storage medium, where the computer-readable storage medium stores a computer program, and the computer program is executed by a processor to implement the method according to the third aspect or any possible implementation of the third aspect.

According to a fourteenth aspect, this application provides computer program software. When the computer program software is executed by a processor, the method according to the first aspect or any possible implementation of the first aspect is performed.

According to a fifteenth aspect, this application provides computer program software. When the computer program software is executed by a processor, the method according to the second aspect or any possible implementation of the second aspect is performed.

According to a sixteenth aspect, this application provides computer program software. When the computer program software is executed by a processor, the method according to the third aspect or any possible implementation of the third aspect is performed.

The solutions provided in the fourth aspect to the sixteenth aspect are used to implement or cooperate to implement the method correspondingly provided in the first aspect, the second aspect, or the third aspect, and therefore can achieve beneficial effects the same as or corresponding to those of the corresponding method in the first aspect, the second aspect, or the third aspect. Details are not described herein again.

### BRIEF DESCRIPTION OF DRAWINGS

FIG. 1 is a diagram of a structure of an intelligent vehicle system according to an embodiment of this application;
FIG. 2 is a diagram of a structure of an in-vehicle network according to an embodiment of this application;
FIG. 3 is a schematic flowchart of a method according to an embodiment of this application;
FIG. 4A is a diagram of an intra-vehicle communication channel according to an embodiment of this application;
FIG. 4B is a diagram of another intra-vehicle communication channel according to an embodiment of this application;
FIG. 4C is a diagram of another intra-vehicle communication channel according to an embodiment of this application;
FIG. 4D is a diagram of a connection relationship between vehicle components according to an embodiment of this application;
FIG. 4E is a diagram of an interaction procedure according to an embodiment of this application;
FIG. 5A is a diagram of another intra-vehicle communication channel according to an embodiment of this application;
FIG. 5B is a diagram of another intra-vehicle communication channel according to an embodiment of this application;
FIG. 5C is a diagram of another intra-vehicle communication channel according to an embodiment of this application;
FIG. 6 is a diagram of another interaction procedure according to an embodiment of this application;
FIG. 7 is a diagram of a logical structure of a control apparatus according to an embodiment of this application;
FIG. 8 is a diagram of a logical structure of a vehicle apparatus according to an embodiment of this application;
FIG. 9 is a diagram of a logical structure of another control apparatus according to an embodiment of this application;
FIG. 10 is a diagram of a hardware structure of a control apparatus according to an embodiment of this application;
FIG. 11 is a diagram of a hardware structure of a vehicle apparatus according to an embodiment of this application; and
FIG. 12 is a diagram of a hardware structure of another control apparatus according to an embodiment of this application.

### DESCRIPTION OF EMBODIMENTS

The following describes the technical solutions in embodiments of this application with reference to the accompanying drawings in embodiments of this application.

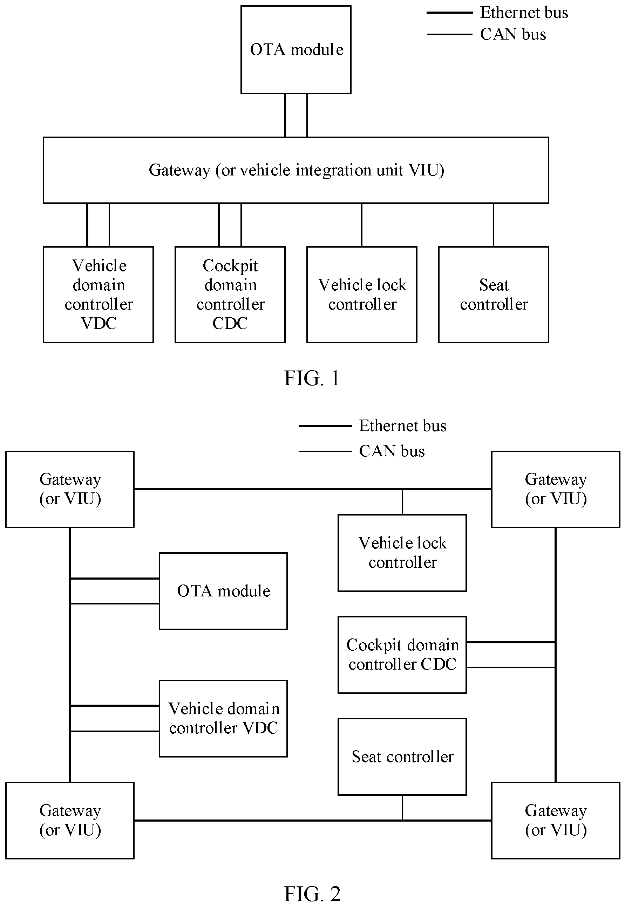

FIG. 1 is an example of a diagram of a structure of an intelligent vehicle system. The intelligent vehicle system includes an over-the-air technology (over-the-air technology, OTA) module, a gateway (gateway, GW) or a vehicle integration unit (vehicle integration unit, VIU), a vehicle domain controller (vehicle domain controller, VDC), a cockpit domain controller (cockpit domain controller, CDC), a vehicle lock controller, and a seat controller. The OTA module, the VDC, the CDC, the vehicle lock controller, and the seat controller are connected to the gateway (or the VIU).

The OTA module may be connected to the gateway (or the VIU) through an Ethernet bus and a controller area network (Controller Area Network, CAN) bus. In addition, the VDC and the gateway (or the VIU) may also be connected through an Ethernet bus and a CAN bus, and the CDC and the gateway (or the VIU) may also be connected through an Ethernet bus and a CAN bus. The vehicle lock controller and the gateway (or the VIU) are connected through a CAN bus, and the seat controller and the gateway (or the VIU) are connected through a CAN bus.

The intelligent vehicle system may include a plurality of gateways (or VIUs), and the plurality of gateways (or VIUs) may be deployed in the intelligent vehicle system in a distributed manner. For ease of understanding, for example, refer to FIG. 2. In FIG. 2, four gateways (or VIUs) are used as an example. As shown in FIG. 2, the gateways (or the VIUs) deployed in a distributed manner may provide a high-speed Ethernet bus for interconnection, to form a ring network. The ring network provides high-reliability communication performance. When any VIU is faulty, the entire ring network can ensure communication security of the entire system through a loopback route. FIG. 2 is merely an example, and does not constitute a limitation on embodiments of this application.

In a possible implementation, the gateway may be a core component in an entire vehicle electronic and electrical architecture. As a data exchange hub of an entire vehicle network, the gateway may route data of networks such as a CAN network, a local interconnect network (Local Interconnect Network, LIN), and a media software upgrade (Media Oriented System Transport, MOST) network in different networks. For example, the gateway may specifically implement a protocol conversion function, protocol encapsulation and forwarding functions, a data format conversion function, and the like.

During specific implementation, the VIU may provide some or all data processing functions or control functions for a plurality of vehicle components. The following describes functions of the VIU by using an example. It should be understood that the VIU may have one or more of the following functions:
1. An electronic control function, which means that the VIU is configured to implement electronic control functions provided by electronic control units (electronic control units, ECUs) inside some or all of the vehicle components. For example, the VIU has a control function required by a vehicle component. For another example, the VIU has a data processing function required by a vehicle component.
2. A function that is the same as that of a gateway, which means that the VIU may further have some or all functions that are the same as those of the gateway, for example, a protocol conversion function, protocol encapsulation and forwarding functions, and a data format conversion function.
3. A function of processing data across vehicle components, which means that processing, computation, and the like are performed on data obtained from actuators of a plurality of vehicle components.

It should be noted that, the data related in the foregoing functions may include running data of the actuator in the vehicle component, for example, a motion parameter of the actuator and an operating status of the actuator. The data related in the foregoing functions may further be data collected through a data collection unit (for example, a sensitive element or a sensor) of the vehicle component, for example, road information of a road on which a vehicle travels, weather information, or the like that are collected through the sensitive element of the vehicle. This is not specifically limited in embodiments of this application.

The OTA module may be configured to implement OTA upgrade of the entire vehicle. The OTA module may perform wireless communication with an OTA server. Specifically, a secure channel may be established between the OTA server and the OTA module. For example, a security channel like a hyper text transfer protocol over secure socket layer (hyper text transfer protocol over secure socket layer, HTTPS) protocol, a transport layer security (transport layer security, TLS) protocol, or a datagram transport layer security (datagram transport layer security, DTLS) protocol is established. Information can be securely transmitted between the OTA server and the OTA module through the established secure channel. For example, a policy package and an upgrade package of a to-be-upgraded component are securely transmitted. The OTA server may be deployed on an electronic device having a wireless communication function and a storage function, or may be deployed on a virtual machine (Virtual Machine, VM) or a container on a cloud, where the cloud may be a cluster including a plurality of electronic devices.

The VDC is configured to provide a service for vehicle components in a body domain and vehicle components in a chassis domain. The vehicle components in the body domain include a door and window lifting controller, an electric rearview mirror, an air conditioner, a central door lock, or the like. The vehicle components in the chassis domain include vehicle components in a braking system, vehicle components in a steering system, vehicle components (such as a throttle) in an acceleration system, and the like.

The foregoing CDC is configured to provide a service for the vehicle components in the cockpit domain. The vehicle components in the cockpit domain include a head-up display, an instrument display, a radio, a navigator, a camera, or the like.

The vehicle lock controller may be configured to: communicate with a vehicle key, and receive and process a signal sent by the vehicle key. For example, the vehicle lock controller may receive an unlocking (or locking) signal sent by the vehicle key, and control a vehicle lock to be unlocked (or locked) based on the unlocking (or locking) signal.

The seat controller may be configured to sense whether there is a person in a seat, or the like through the sensor or the sensitive element.

In a possible implementation, the intelligent vehicle system may further include an autonomous driving domain controller, a vehicle key controller, or the like. The autonomous driving domain controller is configured to provide a service for a vehicle component that implements the autonomous driving function. The vehicle component that implements the autonomous driving function includes a monocular camera, a binocular camera, a millimeter-wave radar, a lidar, an ultrasonic radar, and the like. For example, a function of the autonomous driving domain controller may be implemented by a mobile data center (mobile data center, MDC). The vehicle key controller is used to sense whether the vehicle key is in the vehicle, or the like through the sensor or the sensitive element.

The VDC, the CDC, and the MDC are all configured to provide services for a component in an area of the vehicle, and therefore may be referred to as domain controllers of the vehicle.

In a possible implementation, the intelligent vehicle system may further include a central controller. The central controller includes a vehicle mode management function, and may be configured to coordinate and control domain controllers, vehicle components, or the like in the vehicle.

The foregoing describes constituent components of the intelligent vehicle system by using an example. The components described above are not limited thereto during a specific implementation. Details are not listed one by one in this application.

It can be learned from the foregoing description of the intelligent vehicle system that OTA upgrade of the entire vehicle may be implemented through the OTA module. In an existing OTA upgrade solution, after receiving data such as an upgrade package from the OTA server, the OTA module may use a unified diagnostic services (unified diagnostic services, UDS) protocol to transmit a packet to flush software data in the electronic control unit (electronic control unit, ECU), so as to implement software upgrade. The ECU is a general term of all controllers in the intelligent vehicle system. For example, the VDC, the CDC, the VIU, the gateway, the vehicle lock controller or the seat controller, and the controllers of other vehicle components in the intelligent vehicle system are all ECUs.

However, in an existing intelligent vehicle system architecture, both a UDS protocol packet and a CAN packet are transmitted on a CAN bus, and a priority of the CAN packet is higher than that of the UDS protocol packet. To avoid a frame loss of a UDS packet used for flushing ECU data, the OTA module sends a communication control packet to each ECU through broadcasting in the entire vehicle before sending a UDS packet. The communication control packet indicates the ECU to disable a CAN communication function, that is, the ECU no longer processes a CAN packet. For example, the communication control packet may be sent by using a service 28 of the UDS protocol. After receiving the communication control packet, the gateway (or the VIU) also disables a route forwarding function of the CAN packet to make way for the UDS protocol packet.

Once the CAN communication function of the entire vehicle is disabled, bottom-layer service communication is interrupted, and the entire vehicle cannot normally provide a basic service. For example, after the CAN communication function is disabled, the vehicle cannot sense whether there is a person in the vehicle, and cannot provide basic services such as sound, light, and electricity when there is a person in the vehicle. This affects normal use of a vehicle service by a user.

In addition to the foregoing software upgrade of the entire vehicle through the OTA module, software upgrade of the vehicle may be further performed through wired flushing, for example, software upgrade of the vehicle is performed at a maintenance store site. As the CAN communication function of the entire vehicle is disabled in a software upgrade process through wired flushing, a basic service cannot be normally provided.

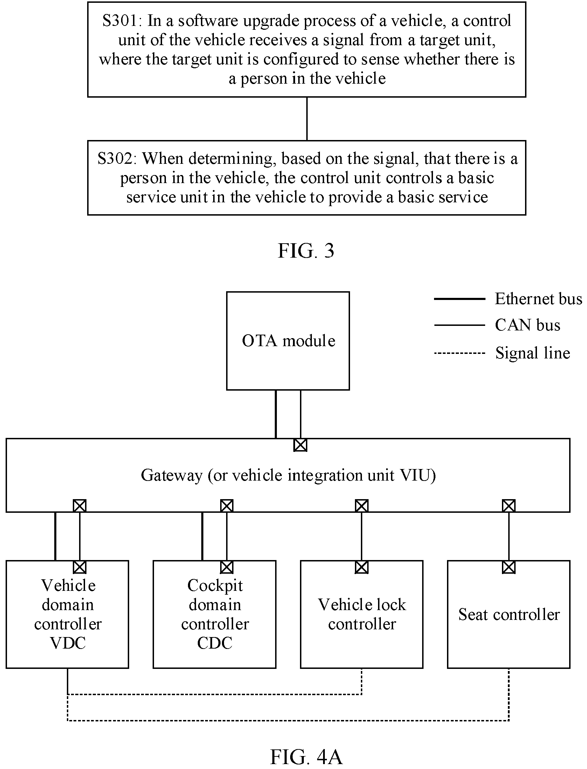

To resolve the foregoing problem that a basic service cannot be normally provided in the software upgrade process of the vehicle, an embodiment of this application provides a processing method for providing a basic service in a vehicle. For example, refer to FIG. 3. The method includes but is not limited to the following steps.

S301: In a software upgrade process of the vehicle, a control unit of the vehicle receives a signal from a target unit, where the target unit is configured to sense whether there is a person in the vehicle.

During specific implementation, the control unit may include one or more of a VDC, a CDC, a VIU, or a gateway. The target unit may include one or more of a vehicle lock controller, a vehicle key controller, a seat controller, a camera, or a vehicle-mounted T-box.

S302: When determining, based on the signal, that there is a person in the vehicle, the control unit controls a basic service unit in the vehicle to provide a basic service.

During specific implementation, the basic service unit includes one or more of an audio control unit, a light control unit, an electrical control unit, or an entertainment control unit in the vehicle. For example, the basic service unit may be one or more of an air conditioner, a vehicle light, an in-vehicle infotainment screen, a horn, a wiper, a speaker, a dashboard, or the like in the vehicle. The air conditioner may provide a service of using the air conditioner, the vehicle light may provide a service of using the vehicle light, the in-vehicle infotainment screen may provide a service of using the in-vehicle infotainment screen, the horn may provide a service of using the horn, the wiper may provide a service of using the wiper, the speaker may provide a service of using the speaker, and the dashboard may provide a service of using the dashboard. This is merely an example, and the basic service unit is not limited in embodiments of this application.

For ease of subsequent description, the signal that is received by the control unit and that is from the target unit may be referred to as a notification signal.

For example, the foregoing process of determining, based on the signal, that there is a person in the vehicle may include one or more of the following cases.

Case 1: The target unit includes the vehicle lock controller. For example, when the user needs to enter the vehicle, the user may send a signal for unlocking a vehicle lock to the vehicle lock controller through a vehicle key or the like. The vehicle lock controller receives the signal for unlocking the vehicle lock, and unlocks the vehicle lock, so that the user can enter the vehicle. In addition, after receiving the signal for unlocking the vehicle lock, the vehicle lock controller generates the notification signal based on the signal for unlocking the vehicle lock, and sends the generated notification signal to the control unit. For example, the generated notification signal may be a signal indicating that the vehicle lock of the vehicle is in an unlocked state. After receiving the notification signal, the control unit may determine, based on the signal indicating the unlocked state, that there is a person in the vehicle. Alternatively, for example, the generated notification signal may be a signal that is generated by the vehicle lock controller based on the signal for unlocking the vehicle lock according to a preset signal generation rule, and that indicates that there is a person in the vehicle. For example, the preset signal generation rule may be, for example, marking a field in the generated signal as an identifier like "1" to indicate that there is a person in the vehicle. Certainly, the identifier may be any identifier, and is not limited to "1" provided herein as an example. In this case, after receiving the notification signal that carries the identifier, the control unit may determine, based on the specific identifier, that there is a person in the vehicle.

In another implementation, for example, when the user leaves the vehicle, the signal for locking the vehicle lock may be sent to the vehicle lock controller through the vehicle key or the like. The vehicle lock controller receives the signal for locking the vehicle lock, and locks the vehicle lock. In addition, after receiving the signal for locking the vehicle lock, the vehicle lock controller generates the notification signal based on the signal for locking the vehicle lock, and sends the generated notification signal to the control unit. For example, the generated notification signal may be a signal indicating that the vehicle lock of the vehicle is in a locked state. After receiving the notification signal, the control unit may determine, based on the signal indicating the locked state, that there is no person in the vehicle. Alternatively, for example, the generated notification signal may be a signal that is generated by the vehicle lock controller based on the signal for locking the vehicle lock according to a preset signal generation rule, and that indicates that there is no person in the vehicle. For example, the preset signal generation rule may be, for example, marking a field in the generated signal as an identifier like "0" to indicate that there is no person in the vehicle. Certainly, the identifier may be any identifier, and is not limited to "0" provided herein as an example. In this case, after receiving the notification signal that carries the identifier, the control unit may determine, based on the specific identifier, that there is no person in the vehicle.

Case 2: The target unit includes the vehicle key controller. The vehicle key controller may sense whether the vehicle key is in the vehicle through a vehicle key sensor or a sensitive element. If the vehicle key is in the vehicle, it indicates that there is a person in the vehicle. If the vehicle key is not in the vehicle, it indicates that there is no person in the vehicle. When the vehicle key sensor or the sensitive element senses that the vehicle key is in the vehicle, a signal indicating that the vehicle key is in the vehicle is sent to the vehicle key controller. After receiving the signal indicating that the vehicle key is in the vehicle, the vehicle key controller generates the notification signal based on the signal indicating that the vehicle key is in the vehicle, and sends the generated notification signal to the control unit. The generated notification signal may indicate that the vehicle key is in the vehicle. After receiving the notification signal, the control unit may determine, based on the notification signal, that there is a person in the vehicle. Alternatively, for example, the generated notification signal may be a signal that is generated by the vehicle lock controller based on the signal indicating that the vehicle key is in the vehicle according to a preset signal generation rule, and that indicates that there is a person in the vehicle. For example, the preset signal generation rule may be, for example, marking a field in the generated signal as an identifier like "1" to indicate that there is a person in the vehicle. Certainly, the identifier may be any identifier, and is not limited to "1" provided herein as an example. In this case, after receiving the notification signal that carries the identifier, the control unit may determine, based on the specific identifier, that there is a person in the vehicle.

If the vehicle key sensor or the sensitive element senses that the vehicle key is not in the vehicle, a signal indicating that the vehicle key is not in the vehicle is sent to the vehicle key controller. After receiving the signal indicating that the vehicle key is not in the vehicle, the vehicle key controller generates a second signal based on the signal indicating that the vehicle key is not in the vehicle. The generated notification signal may indicate that the vehicle key is not in the vehicle. After receiving the notification signal, the control unit may determine, based on the notification signal, that there is no person in the vehicle. Alternatively, for example, the generated notification signal may be a signal that is generated by the vehicle lock controller based on the signal indicating that the vehicle key is not in the vehicle according to a preset signal generation rule, and that indicates that there is no person in the vehicle. For example, the preset signal generation rule may be, for example, marking a field in the generated signal as an identifier like "0" to indicate that there is no person in the vehicle. Certainly, the identifier may be any identifier, and is not limited to "0" provided herein as an example. In this case, after receiving the notification signal that carries the identifier, the control unit may determine, based on the specific identifier, that there is no person in the vehicle.

Case 3: The target unit includes the seat controller. The seat controller may sense whether there is a person in the seat through a seat sensor or a sensitive element. When sensing that there is a person in the seat, the seat sensor or sensitive element sends a signal indicating that there is a person in the seat to the seat controller. After receiving the signal indicating that there is a person in the seat, the seat controller generates the notification signal based on the signal indicating that there is a person in the seat, and sends the generated notification signal to the control unit. For example, the generated notification signal may be a signal indicating that there is a person in the seat of the vehicle. After receiving the notification signal, the control unit may determine, based on the signal indicating that there is a person in the seat, that there is a person in the vehicle. Alternatively, for example, the generated notification signal may be a signal that is generated by the seat controller based on the signal indicating that there is a person in the seat according to a preset signal generation rule, and that indicates that there is a person in the vehicle. For example, the preset signal generation rule may be, for example, marking a field in the generated signal as an identifier like "1" to indicate that there is a person in the vehicle. Certainly, the identifier may be any identifier, and is not limited to "1" provided herein as an example. In this case, after receiving the notification signal that carries the identifier, the control unit may determine, based on the specific identifier, that there is a person in the vehicle.

If the foregoing seat sensor or sensitive element senses that there is no person in the seat, a signal indicating that there is no person in the seat is sent to the seat controller. After receiving the signal indicating that there is no person in the seat, the seat controller generates a second signal based on the signal indicating that there is no person in the seat, and sends the generated notification signal to the control unit. For example, the generated notification signal may be a signal indicating that there is no person in the seat of the vehicle. After receiving the notification signal, the control unit may determine, based on the signal indicating that there is no person in the seat, that there is no person in the vehicle. Alternatively, for example, the generated notification signal may be a signal that is generated by the seat controller based on the signal indicating that there is no person in the seat according to a preset signal generation rule, and that indicates that there is no person in the vehicle. For example, the preset signal generation rule may be, for example, marking a field in the generated signal as an identifier like "0" to indicate that there is no person in the vehicle. Certainly, the identifier may be any identifier, and is not limited to "0" provided herein as an example. In this case, after receiving the notification signal that carries the identifier, the control unit may determine, based on the specific identifier, that there is no person in the vehicle.

Case 4: The target unit includes the camera. The camera may analyze, by shooting an image in the vehicle, whether the image includes a face. When the image shot by the camera includes a face, the notification signal may be generated, and the generated notification signal is sent to the control unit. For example, the generated notification signal may be a signal indicating that the shot image includes a face. After receiving the notification signal, the control unit may determine, based on the signal indicating that the shot image includes a face, that there is a person in the vehicle. Alternatively, for example, the generated notification signal may be a signal that is generated by the camera according to a preset signal generation rule, and that indicates that there is a person in the vehicle based on a case in which the shot image includes a face. For example, the preset signal generation rule may be, for example, marking a field in the generated signal as an identifier like "1" to indicate that there is a person in the vehicle. Certainly, the identifier may be any identifier, and is not limited to "1" provided herein as an example. In this case, after receiving the notification signal that carries the identifier, the control unit may determine, based on the specific identifier, that there is a person in the vehicle.

When the image shot by the camera includes no face, the notification signal may be generated, and the generated notification signal is sent to the control unit. For example, the generated notification signal may be a signal indicating that the shot image includes no face. After receiving the notification signal, the control unit may determine, based on the signal indicating that the shot image includes no face, that there is no person in the vehicle. Alternatively, for example, the generated notification signal may be a signal that is generated by the camera according to a preset signal generation rule, and that indicates that there is no person in the vehicle based on a case in which the shot image includes no face. For example, the preset signal generation rule may be, for example, marking a field in the generated signal as an identifier like "0" to indicate that there is a person in the vehicle. Certainly, the identifier may be any identifier, and is not limited to "0" provided herein as an example. In this case, after receiving the notification signal that carries the identifier, the control unit may determine, based on the specific identifier, that there is a person in the vehicle.

In a possible implementation, the camera may include an image shooting component and an image processing component.

Case 5: The target unit includes the vehicle-mounted T-box. Specifically, the vehicle-mounted T-box may receive a signal from a remote control unit. If the signal indicates that there is a person in the vehicle or indicates to enable a basic service of the vehicle, the vehicle-mounted T-box generates the notification signal, and sends the generated notification signal to the control unit. For example, the generated notification signal may be a signal indicating that there is a person in the vehicle and that is generated by the vehicle-mounted T-box according to a preset signal generation rule based on a case indicating that there is a person in the vehicle or indicating to enable a basic service of the vehicle. For example, the preset signal generation rule may be, for example, marking a field in the generated signal as an identifier like "1" to indicate that there is a person in the vehicle. Certainly, the identifier may be any identifier, and is not limited to "1" provided herein as an example. In this case, after receiving the notification signal that carries the identifier, the control unit may determine, based on the specific identifier, that there is a person in the vehicle.

In a possible implementation, when the case in which the notification signal indicates that there is a person in the vehicle includes the plurality of cases described above, the control unit may determine, by combining the notification signals of the plurality of cases, whether there is a person in the vehicle.

For example, if the control unit determines, based on the signal received from the vehicle lock controller, that there is no person in the vehicle, and determines, based on the signal received from at least one of the vehicle key controller, the seat controller, the camera, or the vehicle-mounted T-box, that there is a person in the vehicle, the control unit may comprehensively analyze and determine that there is a person in the vehicle. For example, this case may be caused because the user has taken a seat in the vehicle and locks the vehicle lock.

For another example, if the control unit determines, based on the signal received from the vehicle lock controller, that there is a person in the vehicle, and determines, based on the signal received from at least one of the vehicle key controller, the seat controller, the camera, or the vehicle-mounted T-box, that there is no person in the vehicle, the control unit may comprehensively analyze and determine that there is no person in the vehicle. For example, this case may be caused because the user has enabled the vehicle lock but does not enter the vehicle.

For another example, if the control unit determines, based on the signal received from the vehicle key controller, that there is no person in the vehicle, and determines, based on the signal received from at least one of the vehicle key controller, the seat controller, the camera, or the vehicle-mounted T-box, that there is a person in the vehicle, the control unit may comprehensively analyze and determine that there is a person in the vehicle. For example, this case may be caused because the user has taken a seat in the vehicle but the vehicle key is not placed on a dedicated apparatus for placing the vehicle key.

In conclusion, a priority of a signal from the vehicle key controller, the seat controller, the camera, or the vehicle-mounted T-box is higher than a priority of a signal from the vehicle lock controller. It may be determined that there is a person in the vehicle provided that it is determined, based on a signal received from at least one of the vehicle key controller, the seat controller, the camera, or the vehicle-mounted T-box, that there is a person in the vehicle.

In a possible implementation, when the target unit includes only the vehicle lock controller, the control unit may independently determine, based on a signal received from the vehicle lock controller, whether there is a person in the vehicle.

The foregoing several comprehensive determining manners are merely examples, and do not constitute a limitation on embodiments of this application. During specific implementation, the control unit may receive one or more notification signals. When a plurality of notification signals are received, whether there is a person in the vehicle may be determined after the plurality of notification signals are comprehensively analyzed. A specific quantity of received notification signals is not limited in this application.

The following describes several implementations of the vehicle control method provided in embodiments of this application by using examples. An example in which software in a vehicle is upgraded through OTA is used for description below. A case in which vehicle software is upgraded through wired flushing is also applicable. Details are not described subsequently.

Implementation 1: A signal line used for communication is additionally arranged between the control unit and the target unit, and the signal line may transmit the notification signal from the target unit to the control unit in a process of upgrading the software in the vehicle through the OTA. As CAN communication in the vehicle is disabled in the process of upgrading the software through the OTA, a signal cannot be transmitted through the CAN bus. Therefore, a signal between the control unit and the target unit may be transmitted through another signal line. For example, one end of the signal line is connected to the control unit, and the other end of the signal line is connected to the target unit. For example, the signal line may be a hard line.

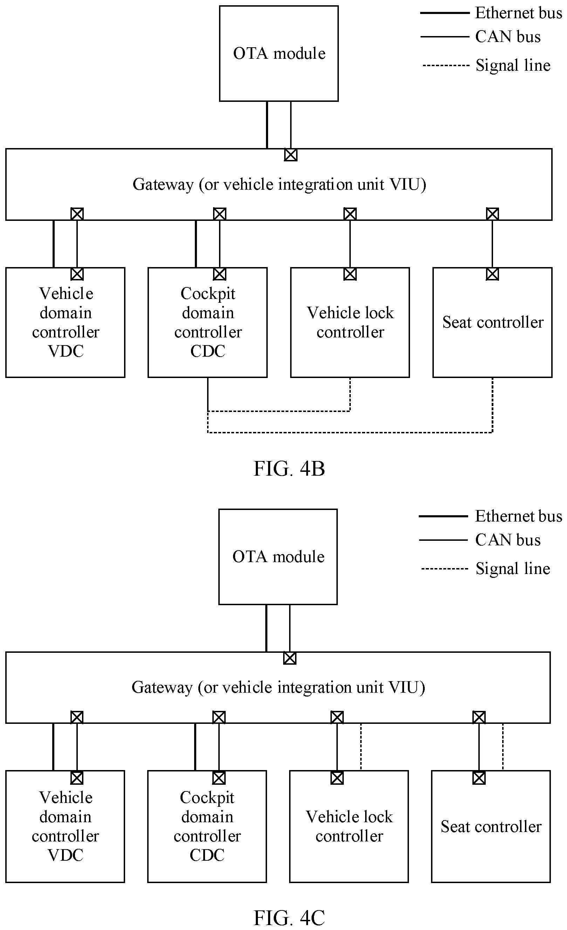

For ease of understanding, for example, refer to FIG. 4A, FIG. 4B, and FIG. 4C. In FIG. 4A, FIG. 4B, and FIG. 4C, a "×" in a small block indicates that the CAN communication function is disabled.

In FIG. 4A, a VDC in the control unit is used as an example. The target unit, for example, at least one of the vehicle lock controller and the seat controller, may be connected to the VDC through a signal line. In this case, in the foregoing process of upgrading the software in the vehicle through the OTA, the vehicle lock controller and/or the seat controller may send a notification signal to the VDC through the signal line, to indicate whether there is a person in the vehicle. It should be noted that, for example, a target unit like a camera or a vehicle key controller may also be connected to the VDC through a signal line, to transmit a notification signal. Details are not described herein. During specific implementation, one or more of the foregoing target units such as the vehicle lock controller, the seat controller, the camera, or the vehicle key controller may be connected to the VDC through a signal line. A quantity of target units connected to a specific signal line is not limited in this application.

In FIG. 4B, a CDC in the control unit is used as an example. The target unit, for example, at least one of the vehicle lock controller and the seat controller, may be connected to the CDC through a signal line. In this case, in the foregoing process of upgrading the software in the vehicle through the OTA, the vehicle lock controller and/or the seat controller may send a notification signal to the CDC through the signal line, to indicate whether there is a person in the vehicle. It should be noted that, for example, a target unit like a camera or a vehicle key controller may also be connected to the CDC through a signal line, to transmit a notification signal. Details are not described herein. During specific implementation, one or more of the foregoing target units such as the vehicle lock controller, the seat controller, the camera, or the vehicle key controller may be connected to the CDC through a signal line. A quantity of target units connected to a specific signal line is not limited in this application.

In FIG. 4C, a gateway (or a VIU) in the control unit is used as an example. The target unit, for example, at least one of the vehicle lock controller and the seat controller, may be connected to the gateway (or the VIU) through a signal line. In this case, in the foregoing process of upgrading the software in the vehicle through the OTA, the vehicle lock controller and/or the seat controller may send a notification signal to the gateway (or the VIU) through the signal line, to indicate whether there is a person in the vehicle. It should be noted that, for example, a target unit like a camera or a vehicle key controller may also be connected to the gateway (or the VIU) through a signal line, to transmit a notification signal. Details are not described herein. During specific implementation, one or more of the foregoing target units such as the vehicle lock controller, the seat controller, the camera, or the vehicle key controller may be connected to the gateway (or the VIU) through a signal line. A quantity of target units connected to a specific signal line is not limited in this application.

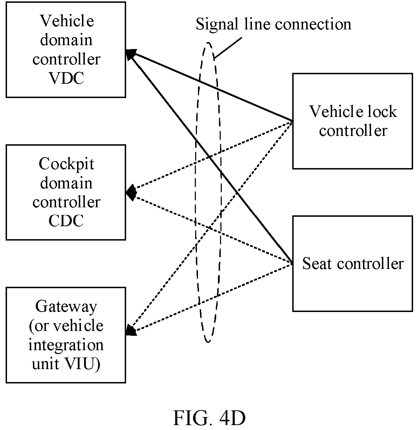

In a possible implementation, the target unit may be connected to one or more of a VDC, a CDC, or a gateway (or a VIU) through a signal line. This is not limited in this application. For ease of understanding, refer to FIG. 4D. FIG. 4D is a diagram of an example in which a target unit (for example, a vehicle lock controller and/or a seat controller) may be connected to one or more of a VDC, a CDC, or a gateway (or a VIU) through a signal line. A solid line arrow in FIG. 4D indicates that the vehicle lock controller and the seat controller are connected to the VDC through a signal line. A dashed arrow in FIG. 4D indicates that in another possible implementation, the vehicle lock controller, the seat controller, and the VDC may be further connected to another control unit (namely, a CDC and/or a gateway (or a VIU)) through a signal line.

During specific implementation, after determining, based on the received notification signal, that there is a person in the vehicle, the control unit may send a notification packet to a basic service unit in the vehicle, to indicate the basic service unit to provide a basic service. For a specific implementation of determining, by the control unit based on the received notification signal, that there is a person in the vehicle, refer to the corresponding description in S302. Details are not described herein again.

In a possible implementation, for a case in which the control unit includes a VDC, it can be learned from the foregoing description that the VDC may provide a service for a basic service unit like an air conditioner. In this case, after determining that there is a person in the vehicle, the VDC sends a notification packet to the basic service unit like the air conditioner. After receiving the notification packet, the basic service unit like the air conditioner enables a specific basic service based on the notification packet, for example, enables the air conditioner. In a possible implementation, the VDC may send a notification packet to a basic service unit like an air conditioner by using a UDS protocol. That is, the notification packet may be a UDS protocol packet.

For example, the notification packet that is sent by the VDC to the basic service unit like the air conditioner when it is determined that there is a person in the vehicle may include information indicating that there is a person in the vehicle. In this case, the basic service unit like the air conditioner enables a corresponding basic service based on the information indicating that there is a person in the vehicle. Alternatively, the notification packet may include information for indicating the basic service unit like the air conditioner to enable a service. In this case, the basic service unit like the air conditioner enables a corresponding service based on the information for indicating to enable the service. A notification packet that is described subsequently and that indicates the basic service unit to provide a basic service is similar. Details are not described again.

If the VDC determines, based on the received notification signal, that there is no person in the vehicle, the VDC may also send a notification packet to the basic service unit like the air conditioner. The notification packet indicates the basic service unit to disable the basic service. After receiving the notification packet, the basic service unit like the air conditioner disables a specific basic service based on the notification packet, for example, disables the air conditioner. In a possible implementation, the notification packet may be a UDS protocol packet.

Similarly, for example, the notification packet that is sent by the VDC to the basic service unit like the air conditioner when it is determined that there is no person in the vehicle may include information indicating that there is no person in the vehicle. In this case, the basic service unit like the air conditioner disables a corresponding basic service based on the information indicating that there is no person in the vehicle. Alternatively, the notification packet may include information for indicating the basic service unit like the air conditioner to disable a service. In this case, the basic service unit like the air conditioner disables a corresponding service based on the information for indicating to disable the service. A notification packet that is described subsequently and that indicates the basic service unit to disable a basic service is similar. Details are not described again.

In a possible implementation, for a case in which the control unit includes a CDC, it can be learned from the foregoing description that the CDC may provide a service for a basic service unit in a cockpit domain. The basic service unit in the cockpit domain includes, for example, a head-up display, a meter display, a radio, a navigator, or a camera. In this case, after determining that there is a person in the vehicle, the CDC sends a notification packet to the basic service unit in the cockpit domain. After receiving the notification packet, the basic service unit in the cockpit domain enables a specific basic service based on the notification packet, for example, enables the head-up display, the meter display, the radio, the navigator, or the camera. In a possible implementation, the CDC may send a notification packet to the basic service unit in the cockpit domain by using a UDS protocol. That is, the notification packet may be a UDS protocol packet.

For example, the notification packet that is sent by the CDC to the basic service unit in the cockpit domain when it is determined that there is a person in the vehicle may include information indicating that there is a person in the vehicle. In this case, the basic service unit in the cockpit domain enables a corresponding basic service based on the information indicating that there is a person in the vehicle. Alternatively, the notification packet may include information for indicating the basic service unit in the cockpit domain to enable a service. In this case, the basic service unit in the cockpit domain enables a corresponding service based on the information for indicating to enable a service.

If the CDC determines, based on the received notification signal, that there is no person in the vehicle, the CDC may also send a notification packet to the basic service unit in the cockpit domain. The notification packet indicates the basic service unit to disable the basic service. After receiving the notification packet, the basic service unit in the cockpit domain disables a specific basic service based on the notification packet, for example, disables the head-up display, the meter display, the radio, the navigator, or the camera. In a possible implementation, the notification packet may be a UDS protocol packet.

Similarly, for example, the notification packet that is sent by the CDC to the basic service unit in the cockpit domain when it is determined that there is no person in the vehicle may include information indicating that there is no person in the vehicle. In this case, the basic service unit in the cockpit domain disables a corresponding basic service based on the information indicating that there is no person in the vehicle. Alternatively, the notification packet may include information for indicating the basic service unit in the cockpit domain to disable a service. In this case, the basic service unit in the cockpit domain disables a corresponding service based on the information for indicating to disable a service.

In a possible implementation, the sending, by the CDC, a notification packet to the basic service unit in the cockpit domain may be sending the notification packet to one or more basic service units in the cockpit domain. A specific basic service unit in which the CDC sends the notification packet is not limited in this application.

In a possible implementation, for a case in which the control unit includes a gateway (or a VIU), after determining that there is a person in the vehicle, the gateway (or the VIU) may first send, to the VDC and/or the CDC, a notification packet indicating that there is a person in the vehicle. Then, the VDC and/or the CDC send/sends, to the basic service unit in the respective domain of the VDC and/or the CDC, a notification packet indicating to provide a basic service. It can be learned from the foregoing description related to FIG. 1 that an Ethernet bus is connected between the gateway (or the VIU) and the VDC, and an Ethernet bus is connected between the gateway (or the VIU) and the CDC. Because the CAN communication is disabled in the OTA upgrade process, the gateway (or the VIU) may send a notification packet to the VDC and/or the CDC through the Ethernet bus. For example, the notification packet sent by the gateway (or the VIU) to the VDC and/or the CDC is a packet according to scalable service-oriented middleware over IP (scalable service-oriented middleware over IP, SOME/IP).

For a specific implementation of sending, by the VDC and/or the CDC, the notification packet indicating to provide a basic service to the basic service unit in the respective domain of the VDC and/or the CDC after receiving the notification packet from the gateway (or the VIU), refer to the foregoing description. Details are not described herein again.

For example, the notification packet that is sent by the gateway (or the VIU) to the VDC and/or the CDC when it is determined that there is a person in the vehicle is determined may include information indicating that there is a person in the vehicle. In this case, the VDC and/or the CDC send/sends, to the basic service unit in the respective domain of the VDC and/or the CDC based on the information indicating that there is a person in the vehicle, the notification packet indicating to provide a basic service. Alternatively, the notification packet may include information for indicating the basic service unit in the VDC and/or the CDC domain to enable a service. In this case, the VDC and/or the CDC send/sends, to the basic service unit in the respective domain of the VDC and/or the CDC based on the indication information for enabling a service, the notification packet indicating to provide a basic service.

If the gateway (or the VIU) determines, based on the received notification signal, that there is no person in the vehicle, the gateway (or the VIU) may first send, to the VDC and/or the CDC, a notification packet indicating that there is no person in the vehicle. Then, the VDC and/or the CDC send/sends, to the basic service unit in the respective domain of the VDC and/or the CDC, a notification packet indicating to disable a basic service. Similarly, for example, the notification packet that is sent by the gateway (or the VIU) to the VDC and/or the CDC is a packet of the SOME/IP protocol.

Similarly, for example, the notification packet that is sent by the gateway (or the VIU) to the VDC and/or the CDC when it is determined that there is no person in the vehicle may include information indicating that there is no person in the vehicle. In this case, the VDC and/or the CDC send/sends, to the basic service unit in the respective domain of the VDC and/or the CDC based on the information indicating that there is no person in the vehicle, the notification packet indicating to disable a basic service. Alternatively, the notification packet may include information for indicating the basic service unit in the VDC and/or the CDC domain to disable a service. In this case, the VDC and/or the CDC send, to the basic service unit in the respective domain of the VDC and/or the CDC based on the indication information for disabling a service, the notification packet indicating to disable a basic service.

In a possible implementation, when the intelligent vehicle system includes the central controller, after determining that there is a person in the vehicle, the VDC, the CDC, or the gateway (or the VIU) may first send, to the central controller, a notification packet indicating that there is a person in the vehicle. Then, the central controller sends, to each basic service unit, a notification packet indicating to provide a basic service. Similarly, for example, the notification packet that is sent by the VDC, the CDC, or the gateway (or the VIU) to the central controller is a packet of the SOME/IP protocol. In addition, for example, the notification packet that is sent by the central controller to the basic service unit may be a UDS protocol packet or the like.

For example, the notification packet that is sent by the VDC, the CDC, or the gateway (or the VIU) to the central controller when it is determined that there is a person in the vehicle may include information indicating that there is a person in the vehicle. In this case, the central controller sends, to the basic service unit in the respective domain of the central controller based on the information indicating that there is a person in the vehicle, the notification packet indicating to provide a basic service. Alternatively, the notification packet may include information for indicating the basic service unit in the central controller to enable a service. In this case, the central controller sends, to the basic service unit in the domain based on the indication information for enabling a service, the notification packet indicating to provide a basic service.

If the VDC, CDC, or the gateway (or the VIU) determines, based on the received notification signal, that there is no person in the vehicle, the VDC, CDC, or the gateway (or the VIU) may first send, to the central controller, a notification packet indicating that there is no person in the vehicle. Then, the central controller sends, to each basic service unit, a notification packet indicating to disable a basic service. Similarly, for example, the notification packet that is sent by the VDC, the CDC, or the gateway (or the VIU) to the central controller is a packet of the SOME/IP protocol. In addition, for example, the notification packet that is sent by the central controller to the basic service unit may be a UDS protocol packet or the like.

Similarly, for example, the notification packet that is sent by the gateway (or the VIU) to the central controller when it is determined that there is no person in the vehicle may include information indicating that there is no person in the vehicle. In this case, the central controller sends, to the basic service unit in the domain based on the information indicating that there is no person in the vehicle, the notification packet indicating to disable a basic service. Alternatively, the notification packet may include information for indicating the basic service unit in the central controller to disable a service. In this case, the central controller sends, to the basic service unit in the domain based on the indication information for disabling a service, the notification packet indicating to disable a basic service.

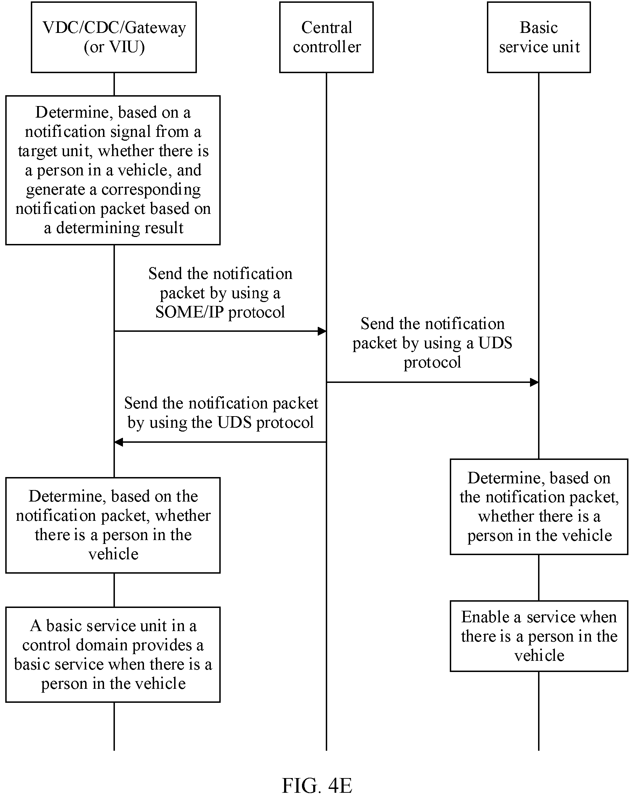

For ease of understanding the foregoing procedure in which the central controller controls the basic service unit to provide a basic service, for example, refer to FIG. 4E. It can be learned from FIG. 4E that the VDC, the CDC, or the gateway (or the VIU) may determine, based on the notification signal from the target unit, whether there is a person in the vehicle, and generate a corresponding notification packet based on a determining result. The notification packet may indicate whether there is a person in the vehicle. Then, the VDC, the CDC, or the gateway (or the VIU) may send the notification packet to the central controller by using the SOME/IP protocol. The central controller then sends a notification packet indicating whether there is a person in the vehicle to the basic service unit by using the UDS protocol. Then, the basic service unit may determine, based on the notification packet, whether there is a person in the vehicle, and enable a service when there is a person in the vehicle. Optionally, the basic service unit may further learn, based on the notification packet, that a service is disabled or suppressed from being enabled when there is no person in the vehicle.

In another possible implementation, it may be further learned from FIG. 4E that the central controller may alternatively send, to the VDC, the CDC, or the gateway (or the VIU) by using the UDS protocol, a notification packet indicating whether there is a person in the vehicle, to indicate a basic service unit in a control domain of the VDC, the CDC, or the gateway (or the VIU) to provide a basic service. The VDC, the CDC, or the gateway (or the VIU) may determine, based on the notification packet received from the central controller, whether there is a person in the vehicle, and when there is a person in the vehicle, control a basic service unit in the domain to provide a basic service. Optionally, when there is no person in the vehicle, the basic service unit in the control domain is disabled or suppressed from enabling a service.

In the foregoing implementation, the notification signal from the target unit to the control unit is transmitted through a signal line additionally arranged between the control unit and the target unit, so that the notification signal can be transmitted without relying on CAN communication in the foregoing process of upgrading the software in the vehicle through the OTA. In this implementation, even if the CAN communication function of the entire vehicle is disabled in the OTA upgrade process, that is, data flushing in the OTA upgrade is not affected, the notification signal of the target unit can still be transmitted to the control unit, so that a basic service can still be provided in the OTA upgrade process, and user experience is further improved.

Implementation 2: Before the software in the vehicle is upgraded through the OTA, the control unit and the target unit receive a communication control packet for indicating to disable CAN communication, and may reserve a CAN communication function between the target unit and the control unit based on a preset configuration. In a possible implementation, in the vehicle, in addition to the CAN communication function between the target unit and the control unit that is reserved based on the preset configuration, a CAN communication function between another vehicle component and the control unit is still disabled.

In a possible implementation, for the target unit, the preset configuration indicates that the target unit is allowed to send only a target notification signal to the control unit through a CAN network (namely, through a CAN bus). For the foregoing control unit, the preset configuration indicates that the control unit is allowed to receive the target notification signal only through the CAN network (namely, the CAN bus). The target notification signal is a notification signal that is from the target unit and that indicates whether there is a person in the vehicle.

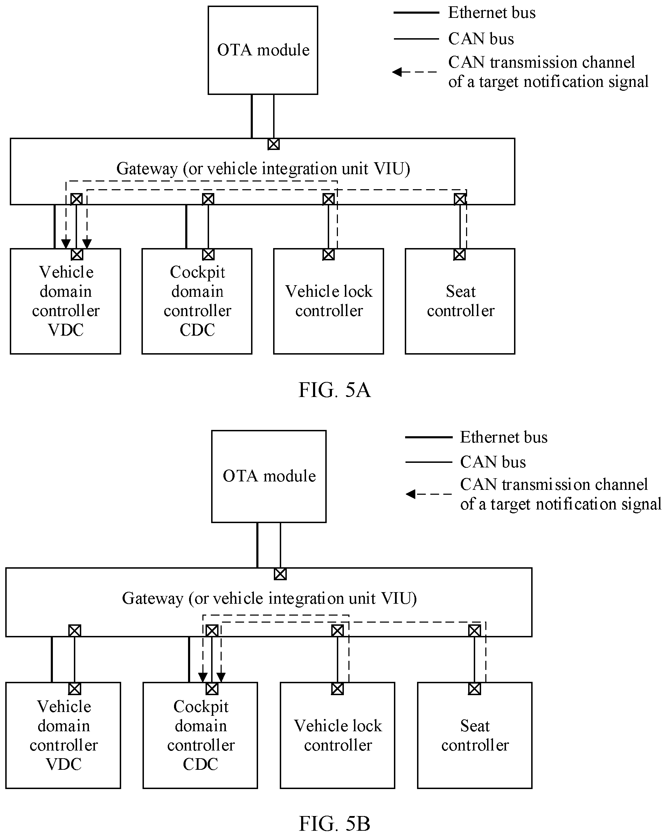

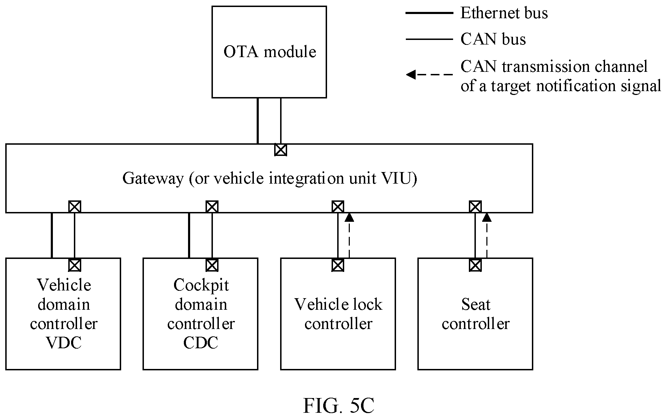

For ease of understanding the implementation 2, for example, refer to FIG. 5A, FIG. 5B, and FIG. 5C.

In FIG. 5A, a VDC in the control unit is used as an example. Before upgrading the software in the vehicle through the OTA, the OTA module sends, to the VDC and the target unit, a communication control packet for indicating to disable CAN communication. In FIG. 5A, one or more of a vehicle lock controller and a seat controller are the target unit. Because the VDC and the target unit are configured in advance, the VDC and the target unit are allowed to maintain CAN communication in an OTA upgrade process. In addition, the gateway (or the VIU) is also configured in advance, and is allowed to forward a CAN packet between the VDC and a target component in the OTA upgrade process. Therefore, even if the VDC and the target unit receive the communication control packet indicating to disable CAN communication, CAN communication can still be maintained between the VDC and the target unit in the OTA upgrade process.

It should be noted that the target unit may further include, for example, a camera or a vehicle key controller. Details are not described herein. During specific implementation, one or more of the foregoing target units such as the vehicle lock controller, the seat controller, the camera, or the vehicle key controller may keep CAN communication with the VDC in the OTA upgrade process. This is not specifically limited in this application.

In a possible implementation, in FIG. 5A, the configuration performed in advance on the VDC, the target unit, and the gateway (or the VIU) may be that only two of the VDC, the target unit, and the gateway (or the VIU) are allowed to keep sending and receiving of the target notification signal in the OTA upgrade process. A signal other than the target notification signal cannot be transmitted to the VDC through a CAN network in the OTA upgrade process. In other words, in the OTA upgrade process, only a CAN notification signal indicating whether there is a person in the vehicle is allowed to be processed, and processing of another CAN signal is stopped, so that impact on a UDS packet in the OTA upgrade process can be reduced, and whether there is a person in the vehicle can be sensed to provide a corresponding basic service.

For example, the configuration performed on the VDC, the target unit, and the gateway (or the VIU) may be that a network segment or a logical address of a component allowed to perform CAN communication is configured in the VDC, the target unit, and the gateway (or the VIU). For example, a network segment or a logical address of the target unit allowed to perform CAN communication may be configured in the VDC. A network segment or a logical address of the VDC allowed to perform CAN communication may be configured in the target unit. A network segment or a logical address of the VDC and the target unit that are allowed to perform CAN communication may be configured in the gateway (or the VIU). Then, in the OTA upgrade process, the target unit may send the target notification signal to the VDC based on the configured network segment or logical address of the VDC through the CAN network. The gateway (or the VIU) may forward the target notification signal from the target unit to the VDC based on the configured VDC and the configured network segment or logical address of the target unit. The VDC receives the target notification signal based on the configured network segment or logical address of the target unit.

In FIG. 5B, a CDC in the control unit is used as an example. Before upgrading the software in the vehicle through the OTA, the OTA module sends, to the CDC and the target unit, a communication control packet for indicating to disable CAN communication. In FIG. 5B, one or more of a vehicle lock controller and a seat controller are the target unit. Because the CDC and the target unit are configured in advance, the CDC and the target unit are allowed to maintain CAN communication in an OTA upgrade process. In addition, the gateway (or the VIU) is also configured in advance, and is allowed to forward a CAN packet between the CDC and a target component in the OTA upgrade process. Therefore, even if the CDC and the target unit receive the communication control packet indicating to disable CAN communication, CAN communication can still be maintained between the CDC and the target unit in the OTA upgrade process.

It should be noted that the target unit may further include, for example, a camera or a vehicle key controller. Details are not described herein. During specific implementation, one or more of the foregoing target units such as the vehicle lock controller, the seat controller, the camera, or the vehicle key controller may keep CAN communication with the CDC in the OTA upgrade process. This is not specifically limited in this application.

In a possible implementation, in FIG. 5B, the configuration performed in advance on the CDC, the target unit, and the gateway (or the VIU) may be that only two of the CDC, the target unit, and the gateway (or the VIU) are allowed to keep sending and receiving of the target notification signal in the OTA upgrade process. A signal other than the target notification signal cannot be transmitted to the CDC through a CAN network in the OTA upgrade process. In other words, in the OTA upgrade process, only a CAN notification signal indicating whether there is a person in the vehicle is allowed to be processed, and processing of another CAN signal is stopped, so that impact on a UDS packet in the OTA upgrade process can be reduced, and whether there is a person in the vehicle can be sensed to provide a corresponding basic service.

For example, the configuration performed on the CDC, the target unit, and the gateway (or the VIU) may be that a network segment or a logical address of a component allowed to perform CAN communication is configured in the CDC, the target unit, and the gateway (or the VIU). For example, a network segment or a logical address of the target unit allowed to perform CAN communication may be configured in the CDC. A network segment or a logical address of the CDC allowed to perform CAN communication may be configured in the target unit. A network segment or a logical address of the CDC and the target unit that are allowed to perform CAN communication may be configured in the gateway (or the VIU). Then, in the OTA upgrade process, the target unit may send the target notification signal to the CDC based on the configured network segment or logical address of the CDC through the CAN network. The gateway (or the VIU) may forward the target notification signal from the target unit to the CDC based on the configured CDC and the configured network segment or logical address of the target unit. The CDC receives the target notification signal based on the configured network segment or logical address of the target unit.

In FIG. 5C, a gateway (or a VIU) in the control unit is used as an example. Before upgrading the software in the vehicle through the OTA, the OTA module sends, to the gateway (or the VIU) and the target unit, a communication control packet for indicating to disable CAN communication. In FIG. 5C, one or more of a vehicle lock controller and a seat controller are the target unit. Because the gateway (or the VIU) and the target unit are configured in advance, the gateway (or the VIU) and the target unit are allowed to maintain CAN communication in the OTA upgrade process. Therefore, even if the gateway (or the VIU) and the target unit receive the communication control packet indicating to disable CAN communication, CAN communication can still be maintained between the gateway (or the VIU) and the target unit in the OTA upgrade process.

It should be noted that the target unit may further include, for example, a camera or a vehicle key controller. Details are not described herein. During specific implementation, one or more of the foregoing target units such as the vehicle lock controller, the seat controller, the camera, or the vehicle key controller may keep CAN communication with the gateway (or the VIU) in the OTA upgrade process. This is not specifically limited in this application.

In a possible implementation, in FIG. 5C, the configuration performed in advance on the gateway (or the VIU) and the target unit may be that only the two are allowed to keep sending and receiving of the target notification signal in the OTA upgrade process. A signal other than the target notification signal cannot be transmitted to the gateway (or the VIU) through a CAN network in the OTA upgrade process. In other words, in the OTA upgrade process, only a CAN notification signal indicating whether there is a person in the vehicle is allowed to be processed, and processing of another CAN signal is stopped, so that impact on a UDS packet in the OTA upgrade process can be reduced, and whether there is a person in the vehicle can be sensed to provide a corresponding basic service.

For example, the configuration performed on the target unit, and the gateway (or the VIU) may be that a network segment or a logical address of a component allowed to perform CAN communication is configured in the target unit, and the gateway (or the VIU). For example, a network segment or a logical address of the gateway (or the VIU) allowed to perform CAN communication may be configured in the target unit. A network segment or a logical address of the target unit allowed to perform CAN communication may be configured in the gateway (or the VIU). Then, in the OTA upgrade process, the target unit may send the target notification signal to the gateway (or the VIU) based on the configured network segment or logical address of the gateway (or the VIU) through the CAN network. The gateway (or the VIU) may receive the target notification signal from the target unit based on the configured network segment or logical address of the target unit.

In a possible implementation, before upgrading the software in the vehicle through the OTA, the OTA module may send, to one or more of a VDC, a CDC, or a gateway (or a VIU) in the control unit, a communication control packet for indicating to disable CAN communication. This is not specifically limited in this application.

In a possible implementation, before the software in the vehicle is upgraded through the OTA, the OTA module may partially disable the CAN communication function in the vehicle based on a preset configuration.

During specific implementation, the OTA controller of the vehicle broadcasts the communication control packet to the vehicle based on a preset configuration. The communication control packet indicates to disable all CAN communication functions except the target CAN communication function in the vehicle. The target CAN communication function includes a first CAN communication function for transmitting a target notification signal between the control unit and the target unit. The target unit is a vehicle component configured to sense whether there is a person in the vehicle. The target notification signal is a notification signal that is from the target unit and that indicates whether there is a person in the vehicle. The first CAN communication function is used to send the target notification signal to the control unit in a process of upgrading the software in the vehicle through the OTA.

In addition, the target CAN communication function further includes a second CAN communication function for transmitting a target notification packet between the control unit and a basic service unit. The target notification packet is generated by the control unit based on the target notification signal. When the target notification signal indicates that there is a person in the vehicle, the target notification packet indicates the basic service unit to provide a basic service. The second CAN communication function is used to send the target notification packet to the basic service unit in a process of upgrading the software in the vehicle through the OTA.

The foregoing preset configuration may be configuration, in the OTA module, of a network segment or a logical address of a component whose CAN communication function is required to be disabled in the OTA upgrade process. Alternatively, the foregoing preset configuration may be configuration, in the OTA module, of a network segment or a logical address of a component whose CAN communication function is required to be reserved in the OTA upgrade process. The network segment or the logical address that reserves the CAN communication function may be used to transmit the target notification signal and the target notification packet. Then, the OTA module broadcasts a communication control packet to a component that requires disabling of a corresponding CAN communication function in the OTA upgrade process based on the configured network segment or logical address. In this way, in the OTA upgrade process, a component in the vehicle disables, based on the received communication control packet, a CAN communication function corresponding to the component. In this way, impact of a CAN signal on a UDS signal is reduced in the OTA upgrade process.

During specific implementation, after determining, based on the target notification signal received through the CAN network, that there is a person in the vehicle, the control unit may send a notification packet to a basic service unit in the vehicle, to indicate the basic service unit to provide a basic service. For a specific implementation of determining, by the control unit based on the received notification signal, that there is a person in the vehicle, refer to the corresponding description in S302. Details are not described herein again.

In a possible implementation, the control unit may send a notification packet to the basic service unit through the UDS protocol, and the notification packet may be a UDS protocol packet.

In another possible implementation, preset configuration may also be performed on the basic service unit. The preset configuration indicates to retain the CAN communication function of the basic service unit in a process of upgrading software in the vehicle through the OTA. In this way, in the process of upgrading software in the vehicle through the OTA, the basic service unit may receive the CAN notification packet from the control unit. In this case, before the software in the vehicle is upgraded through the OTA, even if the OTA module sends, to the basic service unit, a communication control packet for indicating to disable CAN communication, the basic service unit is allowed to maintain CAN communication in the OTA upgrade process because the basic service unit is configured in advance. Therefore, even if the basic service unit receives the communication control packet indicating to disable CAN communication, the basic service unit can still maintain a CAN communication function in the OTA upgrade process.

Optionally, in a possible implementation, the preset configuration of the basic service unit may be that the basic service unit is allowed to receive only the target notification packet from the control unit. The target notification packet is a notification packet that is sent by the control unit and that indicates whether there is a person in the vehicle. Alternatively, the notification packet is a notification packet that is sent by the control unit and that indicates the basic service unit to enable or disable. A packet other than the target notification packet cannot be transmitted to the basic service unit through a CAN network in the OTA upgrade process. In other words, in the OTA upgrade process, only the basic service unit is allowed to process the target notification packet transmitted through the CAN network, and processing of another CAN packet is stopped, so that impact on a UDS packet in the OTA upgrade process can be reduced, and whether there is a person in the vehicle can be sensed to provide a corresponding basic service. In view of this, the control unit may send a notification packet to the basic service unit through the CAN network, that is, the notification packet may be a CAN packet.

For ease of understanding, the following describes cases by using examples.

In a possible implementation, for a case in which the control unit includes a VDC, it can be learned from the foregoing description that the VDC may provide a service for a basic service unit like an air conditioner. In this case, after determining, based on the target notification signal received through the CAN network, that there is a person in the vehicle, the VDC sends a notification packet to the basic service unit like the air conditioner. After receiving the notification packet, the basic service unit like the air conditioner enables a specific basic service based on the notification packet, for example, enables the air conditioner.

For example, the notification packet sent by the VDC to the basic service unit like the air conditioner may be a notification packet indicating that there is a person in the vehicle. Alternatively, the notification packet may be a notification packet indicating the basic service unit to enable a service.

In a possible implementation, the VDC may send a notification packet to a basic service unit like an air conditioner by using a UDS protocol. That is, the notification packet may be a UDS protocol packet.

In another possible implementation, it can be learned from the foregoing description that, in a process of upgrading software of the vehicle through the OTA, the basic service unit may receive and process the CAN packet from the control unit based on a preset configuration. Therefore, the VDC may send a notification packet to the basic service unit like the air conditioner through the CAN network. That is, the notification packet may be a CAN packet.

If the VDC determines, based on the received notification signal, that there is no person in the vehicle, the VDC may also send a notification packet to the basic service unit like the air conditioner. The notification packet indicates the basic service unit to disable the basic service. After receiving the notification packet, the basic service unit like the air conditioner disables a specific basic service based on the notification packet, for example, disables the air conditioner. In a possible implementation, the notification packet may be a UDS protocol packet. In another possible implementation, the notification packet may be a CAN packet. For example, the notification packet sent by the VDC to the basic service unit like the air conditioner may be a notification packet indicating whether there is no person in the vehicle. Alternatively, the notification packet may be a notification packet indicating the basic service unit to disable a service.

In a possible implementation, for a case in which the control unit includes a CDC, it can be learned from the foregoing description that the CDC may provide a service for a basic service unit in a cockpit domain. The basic service unit in the cockpit domain includes, for example, a head-up display, a meter display, a radio, a navigator, or a camera. In this case, after determining, based on the target notification signal received through the CAN network, that there is a person in the vehicle, the CDC sends a notification packet to the basic service unit in the cockpit domain. After receiving the notification packet, the basic service unit in the cockpit domain enables a specific basic service based on the notification packet, for example, enables the head-up display, the meter display, the radio, the navigator, or the camera.

For example, the notification packet sent by the CDC to the basic service unit in the cockpit domain may be a notification packet indicating that there is a person in the vehicle. Alternatively, the notification packet may be a notification packet indicating the basic service unit to enable a service.

In a possible implementation, the CDC may send a notification packet to the basic service unit in the cockpit domain by using a UDS protocol. That is, the notification packet may be a UDS protocol packet.

In another possible implementation, it can be learned from the foregoing description that, in a process of upgrading software of the vehicle through the OTA, the basic service unit may receive and process the CAN packet from the control unit based on a preset configuration. Therefore, the CDC may send a notification packet to the basic service unit in the cockpit domain through the CAN network. That is, the notification packet may be a CAN packet.

If the CDC determines, based on the received notification signal, that there is no person in the vehicle, the CDC may also send a notification packet to the basic service unit in the cockpit domain. The notification packet indicates the basic service unit to disable the basic service. After receiving the notification packet, the basic service unit in the cockpit domain disables a specific basic service based on the notification packet, for example, disables the head-up display, the meter display, the radio, the navigator, or the camera. In a possible implementation, the notification packet may be a UDS protocol packet. In another possible implementation, the notification packet may be a CAN packet. For example, the notification packet sent by the CDC to the basic service unit in the cockpit domain may be a notification packet indicating that there is no person in the vehicle. Alternatively, the notification packet may be a notification packet indicating the basic service unit to disable a service.

In a possible implementation, the sending, by the CDC, a notification packet to the basic service unit in the cockpit domain may be sending the notification packet to one or more basic service units in the cockpit domain. A specific basic service unit in which the CDC sends the notification packet is not limited in this application.

In a possible implementation, for a case in which the control unit includes a gateway (or a VIU), after determining, based on the target notification signal received through the CAN network, that there is a person in the vehicle, the gateway (or the VIU) may first send, to the VDC and/or the CDC, a notification packet indicating that there is a person in the vehicle. Then, the VDC and/or the CDC send/sends, to the basic service unit in the respective domain of the VDC and/or the CDC, a notification packet (for example, the notification packet may be a UDS protocol packet or a CAN packet) indicating to provide a basic service. Similarly, the gateway (or the VIU) may send the notification packet to the VDC and/or the CDC through an Ethernet bus. For example, the notification packet sent by the gateway (or the VIU) to the VDC and/or the CDC is a packet according to scalable service-oriented middleware over IP (scalable service-oriented middleware over IP, SOME/IP).

For a specific implementation of sending, by the VDC and/or the CDC, the notification packet indicating to provide a basic service to the basic service unit in the respective domain of the VDC and/or the CDC after receiving the notification packet from the gateway (or the VIU), refer to the foregoing description. Details are not described herein again.

For example, the notification packet sent by the gateway (or the VIU) to the VDC and/or the CDC may be a notification packet indicating that there is a person in the vehicle. Alternatively, the notification packet may be a notification packet indicating the basic service unit to enable a service.

If the gateway (or the VIU) determines, based on the received notification signal, that there is no person in the vehicle, the gateway (or the VIU) may first send, to the VDC and/or the CDC, a notification packet (for example, the notification packet may be a UDS protocol packet or a CAN packet) indicating that there is no person in the vehicle. Then, the VDC and/or the CDC send/sends, to the basic service unit in the respective domain of the VDC and/or the CDC, a notification packet indicating to disable a basic service. Similarly, for example, the notification packet that is sent by the gateway (or the VIU) to the VDC and/or the CDC is a packet of the SOME/IP protocol. For example, the notification packet sent by the gateway (or the VIU) to the VDC and/or the CDC may be a notification packet indicating that there is no person in the vehicle. Alternatively, the notification packet may be a notification packet indicating the basic service unit to disable a service.

In a possible implementation, when the intelligent vehicle system includes the central controller, after determining that there is a person in the vehicle, the gateway (or the VIU) may first send, to the central controller, a notification packet indicating that there is a person in the vehicle. Then, the central controller sends, to each basic service unit, a notification packet (for example, the notification packet may be a UDS protocol packet or a CAN packet) indicating to provide a basic service. Similarly, for example, the notification packet that is sent by the gateway (or the VIU) to the central controller is a packet of the SOME/IP protocol.

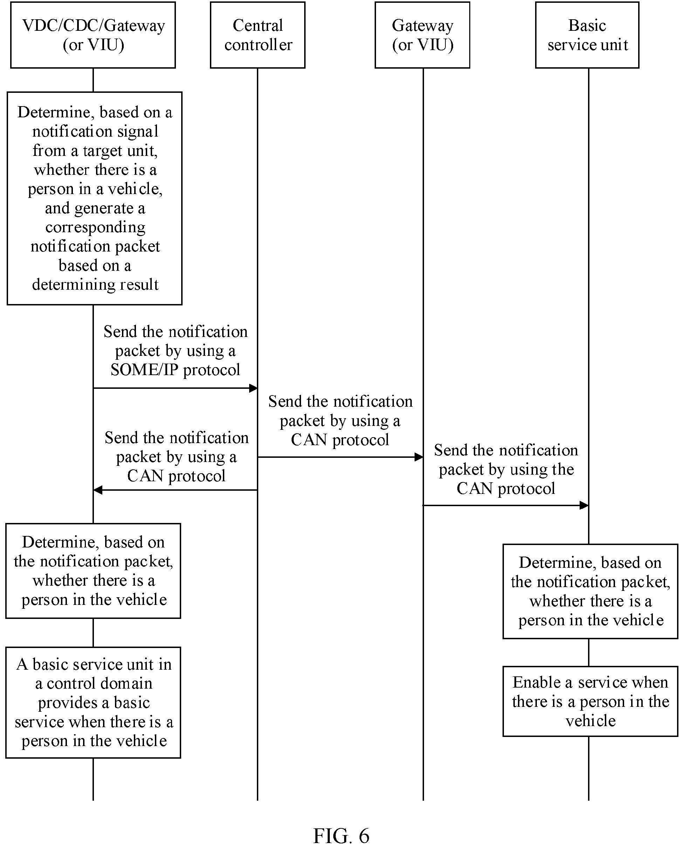

For ease of understanding the foregoing procedure in which the central controller controls the basic service unit to provide a basic service, for example, refer to FIG. 6. It can be learned from FIG. 6 that the VDC, the CDC, or the gateway (or the VIU) may determine, based on the notification signal from the target unit, whether there is a person in the vehicle, and generate a corresponding notification packet based on a determining result. The notification packet may indicate whether there is a person in the vehicle. Then, the VDC, the CDC, or the gateway (or the VIU) may send the notification packet to the central controller by using the SOME/IP protocol. The central controller then sends a notification packet indicating whether there is a person in the vehicle to the basic service unit by using a CAN protocol. Specifically, the central controller may first send the notification packet to the gateway (or the VIU) by using the CAN protocol, and the gateway (or the VIU) sends the notification packet to the basic service unit by using the CAN protocol after further routing. Then, the basic service unit may determine, based on the notification packet, whether there is a person in the vehicle, and enable a service when there is a person in the vehicle. Optionally, the basic service unit may further learn, based on the notification packet, that a service is disabled or suppressed from being enabled when there is no person in the vehicle.

In another possible implementation, it may be further learned from FIG. 6 that the central controller may alternatively send, to the VDC, the CDC, or the gateway (or the VIU) by using a CAN protocol, a notification packet indicating whether there is a person in the vehicle, to indicate a basic service unit in a control domain of the VDC, the CDC, or the gateway (or the VIU) to provide a basic service. The VDC, the CDC, or the gateway (or the VIU) may determine, based on the notification packet received from the central controller, whether there is a person in the vehicle, and when there is a person in the vehicle, control a basic service unit in the domain to provide a basic service. Optionally, when there is no person in the vehicle, the basic service unit in the control domain is disabled or suppressed from enabling a service.

If the gateway (or the VIU) determines, based on the received notification signal, that there is no person in the vehicle, the gateway (or the VIU) may first send, to the central controller, a notification packet indicating that there is no person in the vehicle. Then, the central controller sends, to each basic service unit, a notification packet (for example, the notification packet may be a UDS protocol packet or a CAN packet) indicating to disable a basic service. Similarly, for example, the notification packet that is sent by the gateway (or the VIU) to the central controller is a packet of the SOME/IP protocol.

In the foregoing implementation, in a process of upgrading software in the vehicle through the OTA, a specified CAN communication function is reserved through pre-configuration, so that a notification signal of the target unit can be notified to the control unit, and a basic service can be provided in the OTA upgrade process. In addition, in the software upgrade process of the vehicle, only a CAN communication function necessary for providing a basic service may be reserved, and a CAN communication function of another signal or a vehicle component is still disabled. Therefore, impact on data flushing in the software upgrade process of the vehicle can be reduced as much as possible. In other words, in this application, when impact on a vehicle software upgrade service is reduced as much as possible, a basic service may be provided in the software upgrade process of the vehicle to improve user experience.

The foregoing mainly describes the vehicle control method provided in embodiments of this application. It may be understood that, to implement the foregoing corresponding functions, each apparatus or device includes a corresponding hardware structure and/or a corresponding software module for performing each function. In combination with example units and steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during an actual implementation.

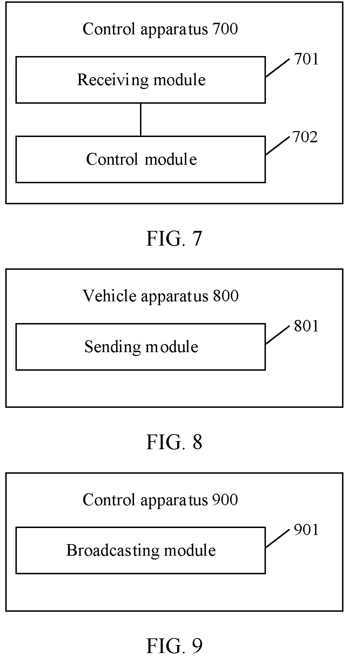

When each function module is obtained through division based on each corresponding function, FIG. 7 is a diagram of a possible logical structure of a control apparatus 700 in a vehicle. The control apparatus 700 may be the foregoing control unit. The control apparatus 700 includes a receiving module 701 and a control module 702.

The receiving module 701 is configured to: in a software upgrade process of the vehicle, receive a signal from a target unit. The target unit is configured to sense whether there is a person in the vehicle. The receiving module 701 may be configured to perform step S301 shown in FIG. 3.

The control module 702 is configured to: when it is determined, based on the signal, that there is a person in the vehicle, control a basic service unit in the vehicle to provide a basic service. The control module 702 may be configured to perform step S302 shown in FIG. 3.

In a possible implementation, the control apparatus 700 is connected to the target unit through a signal line.

The signal line is configured to transmit the signal from the target unit to the control apparatus 700 in the software upgrade process of the vehicle.

In a possible implementation, the receiving module 701 is further configured to receive a communication control packet, where the communication control packet indicates the control apparatus 700 to disable a controller area network CAN communication function.

The control apparatus 700 further includes a reservation module, configured to: after the communication control packet is received, reserve a CAN communication function between the control apparatus 700 and the target unit based on a first preset configuration.

The receiving module 701 is specifically configured to:
receive the signal from the target unit through a controller area network, where the signal is a CAN signal.

In a possible implementation, the first preset configuration indicates that the control apparatus 700 is allowed to receive only a target signal from the target unit through the controller area network, and the target signal is used to determine whether there is a person in the vehicle.

In a possible implementation, the reservation module is further configured to: after the communication control packet is received, reserve a CAN communication function with the basic service unit based on a second preset configuration.

The control apparatus 700 further includes a sending module, and the control module 702 is specifically configured to:
control the sending module to send a packet to the basic service unit through the controller area network, where the packet indicates the basic service unit to provide a basic service, and the packet is a CAN packet.

In a possible implementation, the control apparatus 700 further includes a sending module, and the control module 702 is specifically configured to:
control the sending module to send a packet to the basic service unit by using a unified diagnostic services UDS protocol, where the packet indicates the basic service unit to provide a basic service.

In a possible implementation, the control apparatus 700 includes one or more of a vehicle domain controller VDC, a cockpit domain controller CDC, a vehicle integration unit VIU, or a gateway.

In a possible implementation, the target unit is one or more of a vehicle lock controller, a vehicle key controller, a seat controller, a camera, or a vehicle-mounted T-box of the vehicle.

In a possible implementation, the target unit includes the vehicle key controller. The signal from the target unit includes a signal that is from the vehicle key controller and that indicates whether a key of the vehicle is placed in the vehicle, where a signal indicating that the key of the vehicle is placed in the vehicle indicates that there is a person in the vehicle, and a signal indicating that the key of the vehicle is not placed in the vehicle indicates that there is no person in the vehicle.

In a possible implementation, the target unit includes the seat controller. The signal from the target unit includes a signal that is from the seat controller and that indicates whether there is a person in a seat of the vehicle, where a signal indicating that there is a person in the seat of the vehicle indicates that there is a person in the vehicle, and a signal indicating that there is no person in the seat of the vehicle indicates that there is no person in the vehicle.

In a possible implementation, the target unit includes the vehicle-mounted T-box, and the signal from the target unit includes a signal that is from the vehicle-mounted T-box and that indicates whether there is a person in the vehicle.

In a possible implementation, the target unit further includes the vehicle lock controller. The signal from the target unit further includes a signal that is from the vehicle lock controller and that indicates that a vehicle lock of the vehicle is in an unlocked or locked state, where a signal indicating that the vehicle lock of the vehicle is in the unlocked state indicates that there is a person in the vehicle, and a signal indicating that the vehicle lock of the vehicle is in the locked state indicates that there is no person in the vehicle.

In a possible implementation, a signal from the vehicle key controller, the seat controller, the camera, or the vehicle-mounted T-box has a higher priority than that from the vehicle lock controller.

The control apparatus 700 further includes a determining unit, and that the determining unit is configured to determine, based on the signal, that there is a person in the vehicle is specifically:
when determining, based on the signal from the vehicle lock controller, that there is no person in the vehicle, and determining, based on the signal from the vehicle key controller, the seat controller, the camera, or the vehicle-mounted T-box, that there is a person in the vehicle, determining that there is a person in the vehicle.

For specific operations and beneficial effects of the units in the control apparatus 700 shown in FIG. 7, refer to corresponding descriptions in FIG. 3 and the possible method embodiment thereof. Details are not described herein again.

When each function module is obtained through division based on each corresponding function, FIG. 8 is a diagram of a possible logical structure of a vehicle apparatus 800. The vehicle apparatus 800 may be the foregoing target unit. The vehicle apparatus 800 includes a sending module 801.

The sending module 801 is configured to: in a software upgrade process of a vehicle, send a signal to a control unit of the vehicle when sensing that there is a person in the vehicle, where the signal indicates the control unit to control a basic service unit in the vehicle to provide a basic service.

In a possible implementation, the vehicle apparatus is connected to the control unit through a signal line.

The signal line is configured to transmit the signal from the vehicle apparatus to the control unit in the software upgrade process of the vehicle.

In a possible implementation, the vehicle apparatus further includes:
a receiving module, configured to receive a communication control packet, where the communication control packet indicates the vehicle apparatus to disable a controller area network CAN communication function; and
a reservation module, configured to: after the communication control packet is received, reserve a CAN communication function with the control unit based on a preset configuration.

The sending module 801 is specifically configured to:
send the signal to the control unit through a controller area network, where the signal is a CAN signal.

In a possible implementation, the preset configuration indicates that the vehicle apparatus is allowed to send only a target signal to the control unit through the controller area network, and the target signal is used to determine whether there is a person in the vehicle.

In a possible implementation, the control unit includes one or more of a vehicle domain controller VDC, a cockpit domain controller CDC, a vehicle integration unit VIU, or a gateway.

In a possible implementation, the vehicle apparatus is one or more of a vehicle lock controller, a vehicle key controller, a seat controller, a camera, or a vehicle-mounted T-box of the vehicle.

For specific operations and beneficial effects of the units in the vehicle apparatus 800 shown in FIG. 8, refer to corresponding descriptions in FIG. 3 and the possible method embodiment thereof. Details are not described herein again.

When each function module is obtained through division based on each corresponding function, FIG. 9 is a diagram of a possible logical structure of a control apparatus 900 in a vehicle. The control apparatus 900 may be the foregoing OTA controller. The control apparatus 900 includes a broadcasting module 901.

The broadcasting module 901 is configured to broadcast a communication control packet to the vehicle based on a preset configuration, where the communication control packet indicates to disable all CAN communication functions except a target CAN communication function, the target CAN communication function includes a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle.

The first CAN communication function is used to send the target signal to the control unit in a software upgrade process of the vehicle.

In a possible implementation, the target CAN communication function further includes a second CAN communication function for transmitting a target packet between the control unit and a basic service unit, and the target packet indicates the basic service unit to provide a basic service.

The second CAN communication function is used to send the target packet to the basic service unit in the software upgrade process of the vehicle.

For specific operations and beneficial effects of the units in the control apparatus 900 shown in FIG. 9, refer to corresponding descriptions in the possible method embodiment. Details are not described herein again.

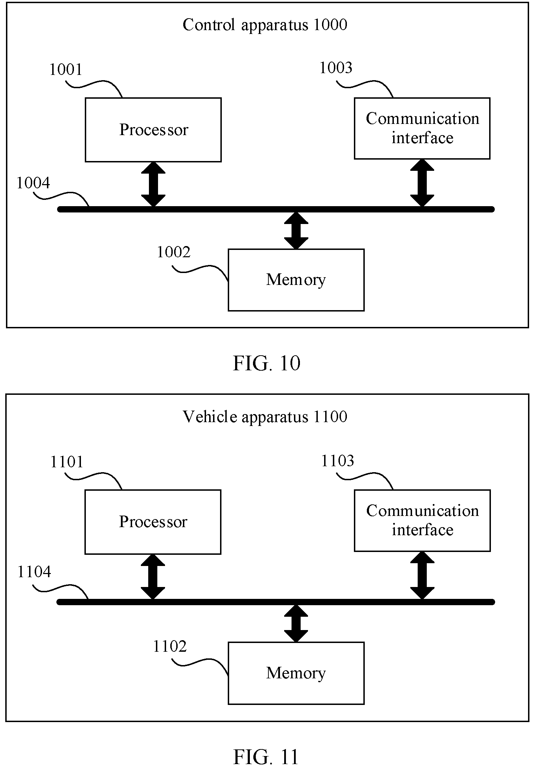

FIG. 10 is a diagram of a possible hardware structure of a vehicle control apparatus according to this application. The control apparatus may be the control unit in the method in the foregoing embodiment. The control apparatus 1000 includes a processor 1001, a memory 1002, and a communication interface 1003. The processor 1001, the communication interface 1003, and the memory 1002 may be connected to each other or connected to each other through a bus 1004.

For example, the memory 1002 is configured to store a computer program and data of the control apparatus 1000. The memory 1002 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Software or program code required for functions of all or some units of the control unit in the foregoing method embodiments is stored in the memory 1002.

In a possible implementation, if software or program code required by functions of some units is stored in the memory 1002, the processor 1001, in addition to invoking the program code in the memory 1002 to implement some functions, may cooperate with another component (for example, the communication interface 1003) to j ointly complete another function (for example, a data receiving or sending function) described in the method embodiments.

There may be a plurality of communication interfaces 1003 that are configured to support the control apparatus 1000 in performing communication, for example, receiving or sending data or a signal.

For example, the processor 1001 may be a central processing unit, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1001 may be configured to read a program stored in the memory 1002, to perform an operation performed by the control unit in the method described in FIG. 3 and the possible embodiment in FIG. 3.

In a specific implementation, the processor 1001 may be configured to read a program stored in the memory 1002, so that the control apparatus 1000 performs the following operations:
in a software upgrade process of a vehicle, a control unit of the vehicle receives a signal from a target unit, where the target unit is configured to sense whether there is a person in the vehicle; and when determining, based on the signal, that there is a person in the vehicle, the control unit controls a basic service unit in the vehicle to provide a basic service.

For specific operations and beneficial effects of the units in the control apparatus 1000 shown in FIG. 10, refer to corresponding descriptions in the method embodiment. Details are not described herein again.

FIG. 11 is a diagram of a possible hardware structure of a vehicle apparatus according to this application. The vehicle apparatus may be the target unit in the method in the foregoing embodiment. The vehicle apparatus 1100 includes a processor 1101, a memory 1102, and a communication interface 1103. The processor 1101, the communication interface 1103, and the memory 1102 may be connected to each other or connected to each other through a bus 1104.

For example, the memory 1102 is configured to store a computer program and data of the vehicle apparatus 1100. The memory 1102 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Software or program code required for functions of all or some units of the target unit in the foregoing method embodiments is stored in the memory 1102.

In a possible implementation, if software or program code required by functions of some units is stored in the memory 1102, the processor 1101, in addition to invoking the program code in the memory 1102 to implement some functions, may cooperate with another component (for example, the communication interface 1103) to jointly complete another function (for example, a data receiving or sending function) described in the method embodiments.

There may be a plurality of communication interfaces 1103 that are configured to support the vehicle apparatus 1100 in performing communication, for example, receiving or sending data or a signal.

For example, the processor 1101 may be a central processing unit, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1101 may be configured to read a program stored in the memory 1102, to perform an operation performed by the target unit in the method described in FIG. 3 and the possible embodiment in FIG. 3.

In a specific implementation, the processor 1101 may be configured to read a program stored in the memory 1102, so that the vehicle apparatus 1100 performs the following operations: In a software upgrade process of a vehicle, the target unit sends a signal to the control unit of the vehicle when sensing that there is a person in the vehicle, where the signal indicates the control unit to control the basic service unit in the vehicle to provide a basic service.

For specific operations and beneficial effects of the units in the vehicle apparatus 1100 shown in FIG. 11, refer to corresponding descriptions in the method embodiment. Details are not described herein again.

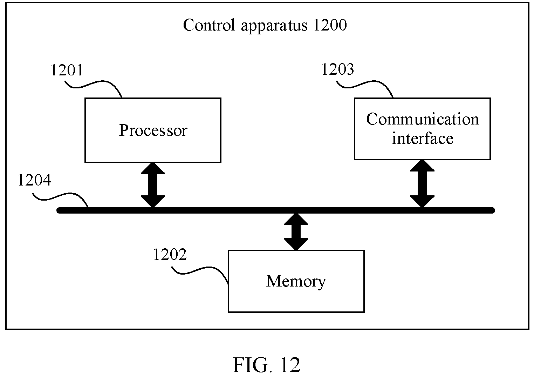

FIG. 12 is a diagram of a possible hardware structure of a vehicle control apparatus according to this application. The control apparatus may be the OTA controller in the method in the foregoing embodiment. The control apparatus 1200 includes a processor 1201, a memory 1202, and a communication interface 1203. The processor 1201, the communication interface 1203, and the memory 1202 may be connected to each other or connected to each other through a bus 1204.

For example, the memory 1202 is configured to store a computer program and data of the control apparatus 1200. The memory 1202 may include but is not limited to a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), and the like.

Software or program code required for functions of all or some units of the OTA controller in the foregoing method embodiments is stored in the memory 1202.

In a possible implementation, if software or program code required by functions of some units is stored in the memory 1202, the processor 1201, in addition to invoking the program code in the memory 1202 to implement some functions, may cooperate with another component (for example, the communication interface 1203) to jointly complete another function (for example, a data receiving or sending function) described in the method embodiments.

There may be a plurality of communication interfaces 1203 that are configured to support the control apparatus 1200 in performing communication, for example, receiving or sending data or a signal.

For example, the processor 1201 may be a central processing unit, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors, or a combination of the digital signal processor and a microprocessor. The processor 1201 may be configured to read a program stored in the memory 1202, to perform an operation performed by the OTA controller in the method described in FIG. 3 and the possible embodiment in FIG. 3.

In a specific implementation, the processor 1201 may be configured to read a program stored in the memory 1202, so that the control apparatus 1200 performs the following operations:

The OTA controller of the vehicle broadcasts a communication control packet to the vehicle based on a preset configuration, where the communication control packet indicates to disable all CAN communication functions except a target CAN communication function in the vehicle, the target CAN communication function includes a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle, where the first CAN communication function is used to send the target signal to the control unit in a software upgrade process of the vehicle.

For specific operations and beneficial effects of the units in the control apparatus 1200 shown in FIG. 12, refer to corresponding descriptions in the method embodiment. Details are not described herein again.

An embodiment of this application further provides a vehicle. The vehicle includes at least one of the control apparatus 1000 shown in FIG. 10, the vehicle apparatus 1100 shown in FIG. 11, or the control apparatus 1200 shown in FIG. 12.

An embodiment of this application further provides a computer-readable storage medium. The computer-readable storage medium stores a computer program. The computer program is executed by a processor to implement an operation performed by a control unit in any one of the foregoing embodiments and the possible embodiments of the foregoing embodiments.

An embodiment of this application further provides a computer-readable storage medium. The computer-readable storage medium stores a computer program. The computer program is executed by a processor to implement an operation performed by a target unit in any one of the foregoing embodiments and the possible embodiments of the foregoing embodiments.

An embodiment of this application further provides a computer-readable storage medium. The computer-readable storage medium stores a computer program. The computer program is executed by a processor to implement an operation performed by an OTA controller in any one of the foregoing embodiments and the possible embodiments of the foregoing embodiments.

An embodiment of this application further provides computer program software. When the computer program software is read and executed by a computer, an operation performed by a control unit in any one of the foregoing embodiments and the possible embodiments is performed.

An embodiment of this application further provides computer program software. When the computer program software is read and executed by a computer, an operation performed by a target unit in any one of the foregoing embodiments and the possible embodiments is performed.

An embodiment of this application further provides computer program software. When the computer program software is read and executed by a computer, an operation performed by an OTA controller in any one of the foregoing embodiments and the possible embodiments is performed.

In conclusion, in this solution, the signal from the target unit can still be received in the software upgrade process of the vehicle, so that when the received signal indicates that there is a person in the vehicle, the basic service unit in the vehicle can be controlled to provide a basic service for a user. Compared with an existing solution in which a service of a vehicle cannot be used in an upgrade process of the vehicle, this solution can meet a basic service requirement of the user in the software upgrade process of the vehicle, thereby improving user experience.

In this application, terms such as "first" and "second" are used to distinguish between same items or similar items that have basically same functions. It should be understood that "first", "second", and "n^{th}" do not have a logical or time sequential dependency relationship, and do not limit the quantity and execution sequence. It should also be understood that although the following descriptions use terms such as "first" and "second" to describe various elements, these elements should not be limited by the terms. These terms are simply used to distinguish one element from another.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A vehicle control method, wherein the method comprises:
in a software upgrade process of a vehicle, receiving, by a control unit of the vehicle, a signal from a target unit, wherein the target unit is configured to sense whether there is a person in the vehicle; and
when determining, based on the signal, that there is a person in the vehicle, controlling, by the control unit, a basic service unit in the vehicle to provide a basic service.

2. The method according to claim 1, wherein the control unit is connected to the target unit through a signal line; and
the signal line is configured to transmit the signal from the target unit to the control unit in the software upgrade process of the vehicle.

3. The method according to claim 1, wherein the method further comprises:
receiving, by the control unit, a communication control packet, wherein the communication control packet indicates the control unit to disable a controller area network CAN communication function; and
after receiving the communication control packet, reserving, by the control unit, a CAN communication function between the control unit and the target unit based on a first preset configuration; and
the receiving, by a control unit of the vehicle, a signal from a target unit comprises:
receiving, by the control unit, the signal from the target unit through a controller area network, wherein the signal is a CAN signal.

4. The method according to claim 3, wherein the first preset configuration indicates that the control unit is allowed to receive only a target signal from the target unit through the controller area network, and the target signal is used to determine whether there is a person in the vehicle.

5. The method according to claim 3 or 4, wherein the method further comprises:
after receiving the communication control packet, reserving, by the control unit, a CAN communication function with the basic service unit based on a second preset configuration; and
the controlling, by the control unit, a basic service unit in the vehicle to provide a basic service comprises:
sending, by the control unit, a packet to the basic service unit through the controller area network, wherein the packet indicates the basic service unit to provide a basic service, and the packet is a CAN packet.

6. The method according to any one of claims 1 to 4, wherein the controlling, by the control unit, a basic service unit in the vehicle to provide a basic service comprises:
sending, by the control unit, a packet to the basic service unit by using a unified diagnostic services UDS protocol, wherein the packet indicates the basic service unit to provide a basic service.

7. The method according to any one of claims 1 to 6, wherein the control unit comprises one or more of a vehicle domain controller VDC, a cockpit domain controller CDC, a vehicle integration unit VIU, or a gateway.

8. The method according to any one of claims 1 to 7, wherein the target unit is one or more of a vehicle lock controller, a vehicle key controller, a seat controller, a camera, or a vehicle-mounted T-box of the vehicle.

9. The method according to claim 8, wherein the target unit comprises the vehicle key controller; and the signal from the target unit comprises a signal that is from the vehicle key controller and that indicates whether a key of the vehicle is placed in the vehicle, wherein a signal indicating that the key of the vehicle is placed in the vehicle indicates that there is a person in the vehicle, and a signal indicating that the key of the vehicle is not placed in the vehicle indicates that there is no person in the vehicle.

10. The method according to claim 8 or 9, wherein the target unit comprises the seat controller; and the signal from the target unit comprises a signal that is from the seat controller and that indicates whether there is a person in a seat of the vehicle, wherein a signal indicating that there is a person in the seat of the vehicle indicates that there is a person in the vehicle, and a signal indicating that there is no person in the seat of the vehicle indicates that there is no person in the vehicle.

11. The method according to any one of claims 8 to 10, wherein the target unit comprises the vehicle-mounted T-box; and the signal from the target unit comprises a signal that is from the vehicle-mounted T-box and that indicates whether there is a person in the vehicle.

12. The method according to any one of claims 9 to 11, wherein the target unit further comprises the vehicle lock controller; and the signal from the target unit further comprises a signal that is from the vehicle lock controller and that indicates that a vehicle lock of the vehicle is in an unlocked or locked state, wherein a signal indicating that the vehicle lock of the vehicle is in the unlocked state indicates that there is a person in the vehicle, and a signal indicating that the vehicle lock of the vehicle is in the locked state indicates that there is no person in the vehicle.

13. The method according to claim 12, wherein a signal from the vehicle key controller, the seat controller, the camera, or the vehicle-mounted T-box has a higher priority than that from the vehicle lock controller; and
the determining, based on the signal, that there is a person in the vehicle comprises:
when determining, based on the signal from the vehicle lock controller, that there is no person in the vehicle, and determining, based on the signal from the vehicle key controller, the seat controller, the camera, or the vehicle-mounted T-box, that there is a person in the vehicle, determining, by the control unit, that there is a person in the vehicle.

14. The method according to any one of claims 1 to 13, wherein the basic service unit comprises one or more of an air conditioner, a speaker, an in-vehicle infotainment screen, a horn, a wiper, a vehicle light, or a dashboard in the vehicle.

15. A vehicle control method, wherein the method comprises:
in a software upgrade process of a vehicle, sending, by a target unit, a signal to a control unit of the vehicle when sensing that there is a person in the vehicle, wherein the signal indicates the control unit to control a basic service unit in the vehicle to provide a basic service.

16. The method according to claim 15, wherein the target unit is connected to the control unit through a signal line; and
the signal line is configured to transmit the signal from the target unit to the control unit in the software upgrade process of the vehicle.

17. The method according to claim 15 or 16, wherein the method further comprises:
receiving, by the target unit, a communication control packet, wherein the communication control packet indicates the target unit to disable a controller area network CAN communication function; and
after receiving the communication control packet, reserving, by the target unit, a CAN communication function with the control unit based on a preset configuration; and
the sending, by a target unit, a signal to a control unit of the vehicle comprises:
sending, by the target unit, the signal to the control unit through a controller area network, wherein the signal is a CAN signal.

18. The method according to claim 17, wherein the preset configuration indicates that the target unit is allowed to send only a target signal to the control unit through the controller area network, and the target signal is used to determine whether there is a person in the vehicle.

19. The method according to any one of claims 15 to 18, wherein the control unit comprises one or more of a vehicle domain controller VDC, a cockpit domain controller CDC, a vehicle integration unit VIU, or a gateway.

20. The method according to any one of claims 15 to 19, wherein the target unit is one or more of a vehicle lock controller, a vehicle key controller, a seat controller, a camera, or a vehicle-mounted T-box of the vehicle.

21. A vehicle control method, wherein the method comprises:
broadcasting, by an OTA controller of a vehicle, a communication control packet to the vehicle based on a preset configuration, wherein the communication control packet indicates to disable all CAN communication functions except a target CAN communication function in the vehicle, the target CAN communication function comprises a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle, wherein
the first CAN communication function is used to send the target signal to the control unit in a software upgrade process of the vehicle.

22. The method according to claim 21, wherein the target CAN communication function further comprises a second CAN communication function for transmitting a target packet between the control unit and a basic service unit, and the target packet indicates the basic service unit to provide a basic service; and
the second CAN communication function is used to send the target packet to the basic service unit in the software upgrade process of the vehicle.

23. A vehicle control apparatus, wherein the control apparatus is located in a vehicle, and the control apparatus comprises:
a receiving module, configured to: in a software upgrade process of the vehicle, receive a signal from a target unit, wherein the target unit is configured to sense whether there is a person in the vehicle; and
a control module, configured to: when it is determined, based on the signal, that there is a person in the vehicle, control a basic service unit in the vehicle to provide a basic service.

24. The control apparatus according to claim 23, wherein the control apparatus is connected to the target unit through a signal line; and
the signal line is configured to transmit the signal from the target unit to the control apparatus in the software upgrade process of the vehicle.

25. The control apparatus according to claim 23, wherein
the receiving module is further configured to receive a communication control packet, wherein the communication control packet indicates the control apparatus to disable a controller area network CAN communication function;
the control apparatus further comprises a reservation module, configured to: after the communication control packet is received, reserve a CAN communication function between the control apparatus and the target unit based on a first preset configuration; and
the receiving module is specifically configured to:
receive the signal from the target unit through a controller area network, wherein the signal is a CAN signal.

26. The control apparatus according to claim 25, wherein the first preset configuration indicates that the control apparatus is allowed to receive only a target signal from the target unit through the controller area network, and the target signal is used to determine whether there is a person in the vehicle.

27. The control apparatus according to claim 25 or 26, wherein
the reservation module is further configured to: after the communication control packet is received, reserve a CAN communication function with the basic service unit based on a second preset configuration; and
the control apparatus further comprises a sending module, and the control module is specifically configured to:
control the sending module to send a packet to the basic service unit through the controller area network, wherein the packet indicates the basic service unit to provide a basic service, and the packet is a CAN packet.

28. The control apparatus according to any one of claims 23 to 26, wherein the control apparatus further comprises a sending module, and the control module is specifically configured to:
control the sending module to send a packet to the basic service unit by using a unified diagnostic services UDS protocol, wherein the packet indicates the basic service unit to provide a basic service.

29. The control apparatus according to any one of claims 23 to 28, wherein the control apparatus comprises one or more of a vehicle domain controller VDC, a cockpit domain controller CDC, a vehicle integration unit VIU, or a gateway.

30. The control apparatus according to any one of claims 23 to 29, wherein the target unit is one or more of a vehicle lock controller, a vehicle key controller, a seat controller, a camera, or a vehicle-mounted T-box of the vehicle.

31. The control apparatus according to claim 30, wherein the target unit comprises the vehicle key controller; and the signal from the target unit comprises a signal that is from the vehicle key controller and that indicates whether a key of the vehicle is placed in the vehicle, wherein a signal indicating that the key of the vehicle is placed in the vehicle indicates that there is a person in the vehicle, and a signal indicating that the key of the vehicle is not placed in the vehicle indicates that there is no person in the vehicle.

32. The control apparatus according to claim 30 or 31, wherein the target unit comprises the seat controller; and the signal from the target unit comprises a signal that is from the seat controller and that indicates whether there is a person in a seat of the vehicle, wherein a signal indicating that there is a person in the seat of the vehicle indicates that there is a person in the vehicle, and a signal indicating that there is no person in the seat of the vehicle indicates that there is no person in the vehicle.

33. The control apparatus according to any one of claims 30 to 32, wherein the target unit comprises the vehicle-mounted T-box; and the signal from the target unit comprises a signal that is from the vehicle-mounted T-box and that indicates whether there is a person in the vehicle.

34. The control apparatus according to any one of claims 30 to 33, wherein the target unit further comprises the vehicle lock controller; and the signal from the target unit further comprises a signal that is from the vehicle lock controller and that indicates that a vehicle lock of the vehicle is in an unlocked or locked state, wherein a signal indicating that the vehicle lock of the vehicle is in the unlocked state indicates that there is a person in the vehicle, and a signal indicating that the vehicle lock of the vehicle is in the locked state indicates that there is no person in the vehicle.

35. The control apparatus according to claim 34, wherein a signal from the vehicle key controller, the seat controller, the camera, or the vehicle-mounted T-box has a higher priority than that from the vehicle lock controller; and
the control apparatus further comprises a determining unit, and that the determining unit is configured to determine, based on the signal, that there is a person in the vehicle is specifically:
when determining, based on the signal from the vehicle lock controller, that there is no person in the vehicle, and determining, based on the signal from the vehicle key controller, the seat controller, the camera, or the vehicle-mounted T-box, that there is a person in the vehicle, determining that there is a person in the vehicle.

36. A vehicle apparatus, wherein the vehicle apparatus comprises:
a sending module, configured to: in a software upgrade process of a vehicle, send a signal to a control unit of the vehicle when sensing that there is a person in the vehicle, wherein the signal indicates the control unit to control a basic service unit in the vehicle to provide a basic service.

37. The vehicle apparatus according to claim 36, wherein the vehicle apparatus is connected to the control unit through a signal line; and
the signal line is configured to transmit the signal from the vehicle apparatus to the control unit in the software upgrade process of the vehicle.

38. The vehicle apparatus according to claim 36 or 37, wherein the vehicle apparatus further comprises:
a receiving module, configured to receive a communication control packet, wherein the communication control packet indicates the vehicle apparatus to disable a controller area network CAN communication function; and
a reservation module, configured to: after the communication control packet is received, reserve a CAN communication function with the control unit based on a preset configuration, wherein
the sending module is specifically configured to:
send the signal to the control unit through a controller area network, wherein the signal is a CAN signal.

39. The vehicle apparatus according to claim 38, wherein the preset configuration indicates that the vehicle apparatus is allowed to send only a target signal to the control unit through the controller area network, and the target signal is used to determine whether there is a person in the vehicle.

40. The vehicle apparatus according to any one of claims 36 to 39, wherein the control unit comprises one or more of a vehicle domain controller VDC, a cockpit domain controller CDC, a vehicle integration unit VIU, or a gateway.

41. The vehicle apparatus according to any one of claims 36 to 40, wherein the vehicle apparatus is one or more of a vehicle lock controller, a vehicle key controller, a seat controller, a camera, or a vehicle-mounted T-box of the vehicle.

42. A vehicle control apparatus, wherein the control apparatus comprises:
a broadcasting module, configured to broadcast a communication control packet to a vehicle based on a preset configuration, wherein the communication control packet indicates to disable all CAN communication functions except a target CAN communication function in the vehicle, the target CAN communication function comprises a first CAN communication function for transmitting a target signal between a control unit and a target unit that are of the vehicle, the target unit is configured to sense whether there is a person in the vehicle, and the target signal is a signal that is from the target unit and that is used to determine whether there is a person in the vehicle, wherein
the first CAN communication function is used to send the target signal to the control unit in a software upgrade process of the vehicle.

43. The control unit according to claim 42, wherein the target CAN communication function further comprises a second CAN communication function for transmitting a target packet between the control unit and a basic service unit, and the target packet indicates the basic service unit to provide a basic service; and
the second CAN communication function is used to send the target packet to the basic service unit in the software upgrade process of the vehicle.

44. A vehicle, wherein the vehicle comprises a control apparatus and a vehicle apparatus, the control apparatus is the control apparatus according to any one of claims 23 to 35, and the vehicle apparatus is the vehicle apparatus according to any one of claims 36 to 41.

45. A computer-readable storage medium, wherein the computer-readable storage medium stores a computer program, and the computer program is executed by a processor to implement the method according to any one of claims 1 to 14; or
the computer-readable storage medium stores a computer program, and the computer program is executed by a processor to implement the method according to any one of claims 15 to 20; or
the computer-readable storage medium stores a computer program, and the computer program is executed by a processor to implement the method according to claim 21 or 22.
